(19) Europäisches Patentamt
European Patent Office
Office européen des brevets

(11) Publication number: **0 129 723 B1**

# (12) EUROPEAN PATENT SPECIFICATION

(45) Date of publication of patent specification: **18.12.91**

(51) Int. Cl.5: **C08F 220/20**, C08F 291/00, C08F 263/04, //(C08F291/00, 220:20,212:36)

(21) Application number: **84106003.1**

(22) Date of filing: **25.05.84**

## (54) Curable poly(acrylate) molding compositions containing a thermoplastic polymer low profile additive.

(30) Priority: **26.05.83 US 498501**
**26.05.83 US 498502**
**26.05.83 US 498577**

(43) Date of publication of application:
**02.01.85 Bulletin 85/01**

(45) Publication of the grant of the patent:
**18.12.91 Bulletin 91/51**

(84) Designated Contracting States:
**DE FR GB IT SE**

(56) References cited:
**EP-A- 0 069 340**
**US-A- 3 718 714**
**US-A- 3 789 051**
**US-A- 4 212 697**

(73) Proprietor: **UNION CARBIDE CORPORATION**
**39 Old Ridgebury Road**
**Danbury Connecticut 06817(US)**

(72) Inventor: **Domeier, Linda Ann**
**5 Farm Road Apartment 164**
**Somerville New Jersey 08876(US)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**W-8000 München 40(DE)**

**EP 0 129 723 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is directed to curable molding compositions containing a mixture of a poly(acrylate), a polymerizable ethylenically unsaturated monomer which serves to crosslink the poly(acrylate) to a thermoset product, and a thermoplastic polymer low profile additive. The curable molding compositions also contain unsubstituted or substituted meta- and/or para-divinylbenzene and, optionally, a free radical initiator, preferably a mixture containing at least one initiator with a 10-hour half-life temperature ($t_{1/2}$) of greater than 90 °C and at least one initiator with a 10-hour half-life temperature ($t_{1/2}$) of less than 90 °C. The curable molding compositions exhibit improved shrink control during the curing reaction. This invention is also directed to molded articles prepared from these curable molding compositions, e.g., those containing one or more fibers with a melting point or a glass transition temperature above 130 °C which exhibit generally improved surface appearance quality. Fiber reinforced thermoset resin articles can be produced from the curable molding compositions of this invention by a very rapid injection molding process which is typically less than about two minutes from the time the cure of the resin mixture is initiated.

It is well known that curable polyester resin systems are widely utilized in making fiber reinforced thermoset articles. The polyesters employed in these resin systems are generally the reaction products of a dicarboxylic acid or anhydride with a polyhydric alcohol. Fiber reinforced molding composites based on polyester resin systems have been advantageously employed in both bulk molding compound (BMC) formulations and sheet molding compound (SMC) formulations. A technical improvement that has made a significant contribution to commercial polyester molding technology is the use of low profile additives to reduce shrinkage during the curing reaction and to thereby improve the dimensional stability and surface smoothness of the fiber reinforced thermoset composite.

A further technical improvement that has made a significant contribution to commercial polyester molding technology is the development of chemically thickened polyester resin systems. Chemical thickening is generally always employed in sheet molding compounds (SMC) and is increasingly being used in bulk molding compounds (BMC). In such systems, a metal oxide or hydroxide such as magnesium oxide or magnesium hydroxide is added to, for example, the uncured polyester/low profile additive along with fillers, glass fiber and other standard materials. The metal oxide or hydroxide interacts with residual acidity in the polyester to build viscosity. The thickened system is relatively tack free and easy to handle, and the high viscosity carries the glass fiber reinforcement to the extremities of the mold during crosslinking of the system.

Other thermoset resin systems based on poly(acrylates) have been developed which can be used to prepare fiber reinforced molding composites by rapid injection molding technology. The poly(acrylates) employed in these resin systems are generally prepared by the reaction of acrylic acid or methacrylic acid or their simple esters with a polyhydric alcohol. Poly(acrylate) resin systems generally have a relatively low viscosity so that they can be used to produce thermoset resin articles containing up to 75 weight percent of reinforcing fibers by a rapid injection molding process. Chemical thickening is not employed in such poly(acrylate) resin systems.

US-A-4,327,013 describes curable molding compositions which contain a mixture of (a) one or more fibers with a melting point or a glass transition temperature above 130 °C, (b) a poly(acrylate) characterized by the following empirical formula:

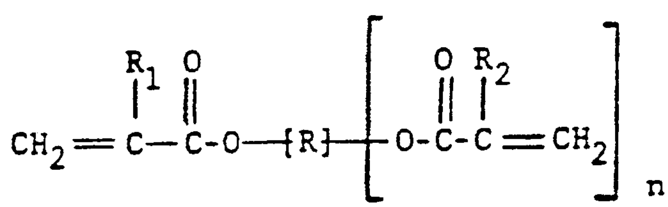

wherein R is the hydroxy-free residue of an organic polyhydric alcohol which contained alcoholic hydroxyl groups bonded to different carbon atoms, $B_1$ and $B_2$ are independently hydrogen or methyl, and n is 1 to 3, (c) an ethylenically unsaturated monomer which is soluble in and copolymerizable with (b), and (d) an elevated temperature free radical curing catalyst capable of effecting the co-reaction of (b) with (c). This patent additionally describes an injection molding process for producing high performance reinforced thermoset molded articles by (i) forming a mixture of the above-described curable molding composition, (ii) providing the mixture into a heatable mold and (iii) molding the mixture at a temperature sufficient to cause the initiation of the co-reaction of (b) with (c) at a temperature not greater than 150 °C and (iv) completing

the molding in less than 6 minutes from the time of the initiation of the co-reaction.

EP-A-69340 describes a curable molding composition containing a mixture of (a) a poly(acrylate) characterized by the following empirical formula:

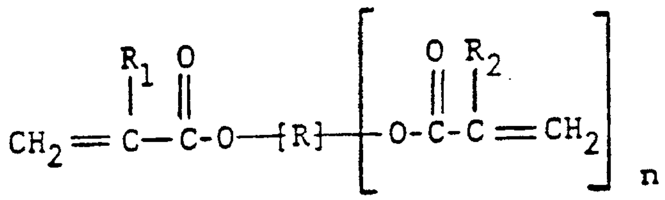

wherein R is the hydroxy-free residue of an organic polyhydric alcohol which contained alcoholic hydroxyl groups bonded to different carbon atoms, $B_1$ and $B_2$ are independently hydrogen or methyl, and n is 1 to 3, (b) acrylic or methacrylic acid or a functionalized derivative thereof having a molecular weight of less than 300 which is different from (a), and (c) an ethylenically unsaturated monomer which is soluble in and copolymerizable with (a) and (b) and which is different from (a) and (b). The compositions can also contain one or more fibers with a melting point or a glass transition temperature above 130°C. The combination of components in these compositions produce reinforced articles having a particularly good balance of mechanical properties by a very rapid injection mold cycle which is typically less than about 2 minutes from the time the cure of the resin is initiated.

EP-A-68487 describes curable molding compositions used for the rapid fabrication of fiber reinforced thermoset resin articles having improved mechanical properties which contain a mixture of (a) a thermosettable organic material containing two or more polymerizable carbon-carbon double bonds which can include a poly(acrylate) characterized by the following empirical formula:

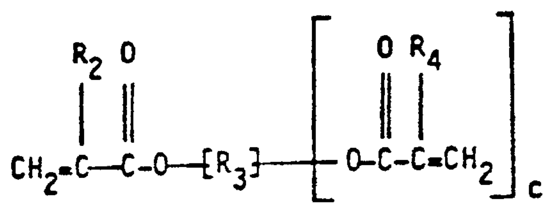

wherein $R_3$ is the hydroxy-free residue of an organic polyhydric alcohol which contained alcoholic hydroxyl groups bonded to different carbon atoms, $R_2$ and $R_4$ are independently hydrogen or methyl, and c is 1 to 3, (b) acrylic or methacrylic acid or a functionalized derivative thereof having a molecular weight of less than 300 which is different from (a), and (c) an ethylenically unsaturated monomer which is soluble in and copolymerizable with (a) and (b) and which is different from (a) and (b). The compositions can also contain one or more fibers with a melting point or a glass transition temperature above 130°C. The combination of components in these compositions produce reinforced articles having a particularly good balance of mechanical properties by a very rapid injection mold cycle which is typically less than about 2 minutes from the time the cure of the resin is initiated.

EP-A-68512 describes curable molding compositions used for the rapid fabrication of fiber reinforced thermoset resin articles having improved mold release characteristics which contain (a) a thermosettable organic material containing two or more polymerizable carbon-carbon double bonds which can include a poly(acrylate) characterized by the following empirical formula:

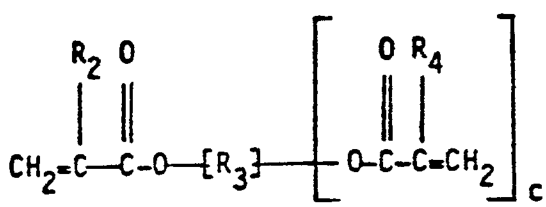

wherein $R_3$ is the hydroxy-free residue of an organic polyhydric alcohol which contained alcoholic hydroxyl groups bonded to different carbon atoms, $R_2$ and $R_4$ are independently hydrogen or methyl, and c is 1 to 3,

(b) a monoethylenically unsaturated monomer which forms a liquid homogeneous mixture with and is copolymerizable with (a), and (c) a thermosettable organic material containing two or more polymerizable carbon-carbon double bonds having a cross-link density of greater than (a) and containing allyl, vinyl, acrylic and methacrylic types of carbon-carbon double bonds. This application additionally describes an improved process for rapidly fabricating fiber reinforced thermoset resin articles having improved mold release characteristics in molds having shapes that cause problems in releasing the molded article therefrom.

EP-A-68511 describes curable molding compositions used for the rapid fabrication of fiber reinforced thermoset resin articles having improved mechanical properties which contain (a) a thermosettable organic material containing two or more polymerizable carbon-carbon double bonds which can include a poly(acrylate) characterized by the following empirical formula:

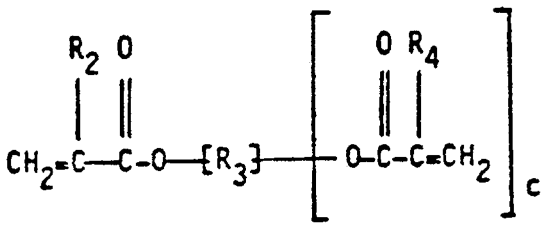

wherein $R_3$ is the hydroxy-free residue of an organic polyhydric alcohol which contained alcoholic groups bonded to different carbon atoms, $R_2$ and $R_4$ are independently hydrogen or methyl, and c is 1 to 3, (b) an ethylenically unsaturated monomer which forms a liquid homogeneous mixture with and is copolymerizable with (a) and is different from (a), and (c) an effective amount of an initiator or a mixture of initiators characterized by a ten-hour half-life temperature, or in the case of a mixture of initiators, an average ten-hour half-life temperature, of greater than 50°C and less than 105°C, which produces on decomposition less than 1.0 milliliters of gas per gram of resin as measured at a temperature of 25°C and a pressure of one atmosphere. This application additionally describes an improved process for rapidly fabricating fiber reinforced thermoset resin articles having improved mechanical properties utilizing the above-described curable molding compositions therein.

US-A-4212697 is directed to a process for producing a glass fiber-reinforced molded sheet by impregnating glass fibers with a resin syrup and thereafter hardening said syrup, which syrup is 20 to 35 wt.% vinyl aromatic hydrocarbon and comprises 25 to 50 parts by weight acrylonitrile - vinyl aromatic hydrocarbon copolymer and 75 to 50 parts by weight (meth)acrylic acid (ester).

While poly(acrylate) resin systems provide for the rapid production of high performance reinforced thermoset resin articles with generally minimal surface requirements such as automotive structural components and the like, it is highly desirable that such reinforced thermoset resin articles have improved surface qualities which will allow the molded article to be used in the rapid production of surface critical articles or parts such as automobile exteriors and the like. It is highly desirable that such surface critical articles or parts have very low profile surfaces which are essentially free of warpage, undulations, fiber prominence or similar defects. There is, therefore, a need to provide curable low profile poly(acrylate) resin systems which exhibit reduced shrinkage during the curing reaction and thereby afford improved surface appearance in the reinforced molded articles obtainable therefrom.

It has been found as a result of the present invention that curable molding compositions containing a poly(acrylate), a polymerizable ethylenically unsaturated monomer which serves to crosslink the poly(acrylate) to a thermoset product, unsubstituted or substituted meta- and/or para-divinylbenzene, and a thermoplastic polymer low profile additive exhibit improved shrink control during the curing reaction.

Reinforced thermoset resin articles containing one or more fibers with a melting point or a glass transition temperature above 130°C and prepared from the curable molding compositions of this invention also exhibit generally improved surface appearance quality.

The present invention is directed to curable molding compositions comprising a mixture of: (a) a poly(acrylate) characterized by the following empirical formula:

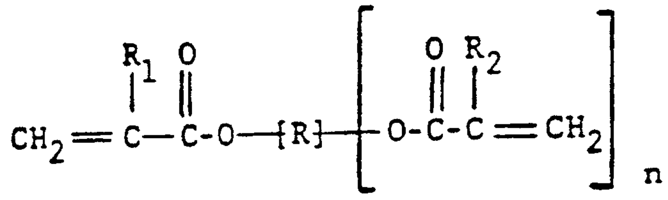

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;

(b) an ethylenically unsaturated monomer which is soluble in and copolymerizable with (a);

(c) unsubstituted or substituted meta- and/or para-divinylbenzene; and

(d) a thermoplastic polymer low profile additive which is soluble in the mixture of (a), (b) and (c);

components (a) and (b) each being present in amounts of from 10 to 75 weight percent, based on the total weight of components (a) to (d).

The curable molding compositions can optionally contain a mold release agent, fibers, fillers and other additives.

The curable molding compositions exhibit improved shrinkage control during the curing reaction and the reinforced thermoset resin products prepared therefrom exhibit generally improved surface appearance quality in comparison with curable molding compositions and reinforced thermoset resin products prepared therefrom which do not contain unsubstituted or substituted meta-and/or para-divinylbenzene and a thermoplastic polymer low profile additive as described herein.

There is known to be a strong correlation between the cure shrinkage of a curable molding composition and the surface appearance quality of fiber reinforced thermoset resin articles prepared therefrom.

The unfilled curable molding compositions of this invention have a low viscosity, i.e., from 10 to 1000 mPa•s (centipoise), preferably less than 600 mPa•s (centipoise), so that they can be used to produce thermoset resin articles containing up to 75 weight percent of reinforcing fibers by a very rapid injection molding process. A low curable molding composition viscosity is highly desirable in a rapid injection molding process in order to avoid any movement of the reinforcing fibers during the injection step. The reinforcing fibers have a melting point or a glass transition temperature above 130°C and include, for example, fiberglass, carbon fibers, aromatic polyamide fibers, and mixtures thereof. Fiber reinforced thermoset resin articles can be produced from the curable molding compositions of this invention by a very rapid injection molding process which is typically less than two minutes, oftentimes less than one minute, from the time the cure of the resin mixture is initiated. The curable molding compositions do not require the use of thickening agents in the molding technology described herein.

The poly(acrylates) useful in the curable molding compositions of this invention are advantageously compatible or soluble with a large variety of low profile additives. In the rapid fabrication of fiber reinforced thermoset resin articles, it is important that a homogeneous solution or dispersion of poly(acrylate), low profile additive and other ingredients be injected into the molding apparatus in order to provide improved surface appearance properties in the reinforced thermoset articles. A common problem with many polyester resins is the limited solubility of certain low profile additives therein and the tendency of the polyester/low profile additive mixture to separate into two phases.

The curable molding compositions of this invention are particularly suitable for the rapid fabrication of fiber reinforced thermoset resin articles having improved surface appearance properties. The fiber reinforced thermoset resin articles prepared from the curable molding compositions can have utility in surface critical molding articles or parts such as automobile exteriors and the like. Surface critical molding articles or parts have very low profile surfaces which are essentially free of warpage, undulations, fiber prominence and similar defects.

The invention is further directed to an improved process for producing a fiber reinforced article which comprises the steps of (a) providing in a heatable matched metal die mold, a bonded web of one or more of said fibers having a melting point or a glass transition temperature above 130°C, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and

removing the cured thermoset article therefrom, wherein said thermosettable organic material is the present curable molding composition.

The fiber reinforced article prepared by the above described process is also a part of this invention as are other fiber reinforced molded articles prepared from the curable molding compositions.

The polyhydric alcohol suitable for preparing the poly(acrylate) contained in the compositions of the present invention typically contains at least two carbon atoms and may contain 2 or more hydroxyl groups. These polyhydric alcohols include alkane diols, triols, tetraols, aliphatic ether containing diols, triols, tetraols, cycloaliphatic group containing diols, triols, and tetraols, and aromatic group containing diols, triols, and tetraols. Specific illustrations of organic polyols suitable in the practice of this invention include the following: ethylene glycol, diethylene glycol, 2,2,4-trimethyl-1,3-pentanediol, dipropylene glycol, propylene glycol, polypropylene glycol having an average molecular weight of 150 to 600, triethylene glycol, 1,4-cyclohexanedimethanol, neopentyl glycol, 2,2-dimethyl-3-hydroxypropyl-2,2-dimethyl-3-hydroxypropionate, polyethylene glycol having an average molecular weight of 150 to 600, 2,2-bis[4-(2-hydroxyethoxy)phenyl] propane, 2,2-bis[4-(2-hydroxypropoxy)phenyl]propane, triethanolamine, 1,3-butanediol, tetraethylene glycol, 2,2-bis(4-hydroxyphenyl)propane, glycerine, trimethylolpropane, 1,4-butanediol, the polycaprolactone ester of trimethylolpropane which contains 1.5 equivalents of caprolactone ester, the polycaprolactone ester of trimethylolpropane which contains 3.6 equivalents of caprolactone, 2-ethyl-1,3-hexanediol, 1,5-pentanediol, tripropylene glycol, 2,2-bis-(4-hydroxycyclohexyl)propane, 1,2,6-hexane triol, 1,3-propanediol and 1,6-hexanediol. Mixtures of the aforementioned polyols may also be used in this invention.

The poly(acrylate) of the aforementioned organic polyhydric alcohol can be prepared by the reaction of acrylic acid or methacrylic acid or their simple esters with the polyhydric alcohol under conditions well known in the art. Poly(acrylates) produced by the addition of acrylic or methacrylic acid across ethylenically unsaturated bonds may also be used in the practice of this invention.

The preferred poly(acrylates) include one or more of ethoxylated bisphenol A dimethacrylate. tetraethylene glycol dimethacrylate, diethylene glycol dimethacrylate, ethoxylated bisphenol A diacrylate, propoxylated bisphenol A dimethacrylate. propoxylated bisphenol A diacrylate, tetraethylene glycol diacrylate, diethylene glycol diacrylate, ethylene glycol dimethyacrylate, trimethylolpropane triacrylate, and trimethylolpropane trimethacrylate. The poly(acrylate) is present in the curable molding compositions of this invention in an amount of from 10 to 75 weight percent, preferably from 15 to 50 weight percent.

Unless otherwise indicated, the term "weight percent" used herein refers to the total weight of components (a), (b), (c) and (d) of the curable molding compositions exclusive of other additives such as fillers.

The poly(acrylates) suitable for use in the present invention can be further blended with one or more of the following thermosettable organic materials containing two or more polymerizable carbon-carbon double bonds: (1) an unsaturated polyester; (2) a half-ester of a hydroxyl-terminated polyester; (3) a half-ester of an organic polyol; (4) a vinyl ester resin produced by the addition of an unsaturated monocarboxylic acid to a polyepoxide; (5) a urethane poly(acrylate); and (6) an unsaturated isocyanurate. These materials can be blended with the poly(acrylates) in an amount such that the curable molding compositions remain homogeneous. Suitable thermosettable organic materials which can be blended with the poly(acrylates) are more fully described, for example, in EP-A-68511, 68512 and 68487.

Suitable ethylenically unsaturated monomers which may be employed in the practice of this invention are one or more ethylenically unsaturated copolymerizable monomers which are soluble in and copolymerizable with the poly(acrylate). These ethylenically unsaturated monomers contain at least a single $-CH=C<$ group, and preferably a $CH_2=C<$ group and include styrene and its derivatives and homologues, diallylphthalate, triallyl isocyanurate. nonfunctionalized esters of acrylic or methacrylic acid (such as ethyl acrylate, butyl acrylate, and methyl methacrylate), unsaturated nitriles (such as acrylonitrile and methacrylonitrile). Also included herein are low levels of maleic anhydride.

Other suitable ethylenically unsaturated monomers include acrylic or methacrylic acid or a functionalized derivative thereof having a molecular weight of less than 300 and which is different from the poly(acrylate). Mixtures of these may also be used in this invention. The functionalized derivatives are characterized by the presence of acrylate, methacrylate, acrylamide, and methacrylamide groups and also by the presence of functional groups such as hydroxyl, amino, alkylamino, and epoxide, for example. The molecular weight of these monomers is typically less than 300. Preferred monomers are characterized by the following formula:

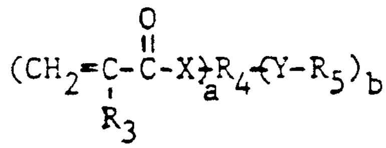

wherein $R_3$ is independently hydrogen or methyl; X and Y are independently -O- or

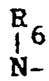

wherein $R_6$ is hydrogen or lower alkyl; $R_4$ is an aliphatic or aromatic radical containing from 2 to 10 carbon atoms, optionally containing -O- or

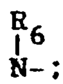

$R_5$ is hydrogen or an aliphatic or aromatic radical containing from 1 to 10 carbon atoms; and a and b are integers of or greater than 1, preferably 1 to 3.

These functionalized derivatives of acrylic or methacrylic acid include 2-hydroxyethyl acrylate, 2-hydroxyethyl methacrylate, hydroxylpropyl acrylate, hydroxypropyl methacrylate, hydroxybutyl acrylate, hydroxybutyl methacrylate, 2-aminoethyl acrylate, 2-aminoethyl methacrylate, 2-methylaminoethyl acrylate, 2-methylaminoethyl methacrylate, 2-dimethylaminoethyl acrylate, 2-dimethylaminoethyl methacrylate, 2-hydroxyethyl acrylamide, 2-hydroxyethyl methacrylamide, 2-aminoethyl acrylamide, 2-aminoethyl methacrylamide, diethylene glycol monoacrylate, diethylene glycol monomethacrylate, 2-methoxyethyl acrylate, 2-methoxyethyl methacrylate, pentaerythritol monoacrylate, pentaerythritol monomethacrylate, pentaerythritol diacrylate, pentaerythritol dimethacrylate, pentaerythritol triacrylate, glycerol monoacrylate, glycerol monomethacrylate, trimethylolpropane monoacrylate, trimethylolpropane monomethacrylate, glycidyl methacrylate, glycidyl acrylate, hydroxymethyl acrylamide or mixtures thereof. It is understood that several isomers of many of these monomers exist and would be suitable for use herein either as individual components or as mixtures with any of the other monomers. Similarly, it is understood that additional derivatives containing aromatic rings and other alkyl groups in the acid or ester portion of the above formula may also be included.

Preferred functionalized derivatives of acrylic or methacrylic acid employed in the practice of this invention include 2-hydroxyethyl methacrylate, 2-hydroxyethyl acrylate, and hydroxypropyl acrylate.

Mixtures of the aforementioned ethylenically unsaturated monomers may be effectively employed in the practice of this invention. Such mixtures may be advantageous in improving the solubility of the thermoplastic polymer low profile additive in the curable molding compositions of this invention. Preferred ethylenically unsaturated monomer mixtures include styrene and at least one of 2-hydroxyethyl methacrylate, 2-hydroxyethyl acrylate and hydroxypropyl acrylate.

The preferred ethylenically unsaturated monomer contemplated in the practice of this invention is styrene or a mixture of styrene and 2-hydroxyethyl methacrylate. The ethylenically unsaturated monomer is present in the curable molding compositions of this invention in an amount of from 10 to 75 weight percent, preferably from 25 to 65 weight percent.

An essential component of the curable molding compositions of this invention is a thermoplastic polymer low profile additive. In one aspect, the thermoplastic polymer low profile additives that may be employed in this invention are thermoplastic polymers of vinyl acetate, saturated thermoplastic polyesters, and mixtures of the same. In another aspect of the invention, the thermoplastic polymer low profile additives that may be employed herein are thermoplastic polyalkyl acrylate or methacrylate polymers. In still another aspect of this invention, the thermoplastic polymer low profile additives that may be employed in this invention include homopolymers of styrene and substituted styrene and also copolymers containing styrene. The thermoplastic polymer low profile additives suitable for use in the present invention are soluble in the resin mixture of poly(acrylate) and the ethylenically unsaturated monomer. The resin mixtures useful in the

curable molding compositions of this invention are advantageously compatible or soluble with a large variety of low profile additives.

Suitable thermoplastic vinyl acetate polymer low profile additives include poly(vinyl acetate) homopolymers and copolymers containing at least 50 weight percent vinyl acetate. Such polymers include, for example, vinyl acetate homopolymer; carboxylated vinyl acetate polymers including copolymers of vinyl acetate and ethylenically unsaturated carboxylic acids, such as acrylic acid, methacrylic acid, crotonic acid, maleic acid, fumaric acid, itaconic acid and anhydrides such as maleic anhydride and vinyl acetate/vinyl chloride/maleic acid terpolymer. Reference is made to US-A-3,718,714 and GB-A-1,361,841 for descriptions of some of the suitable vinyl acetate polymer low profile additives.

The useful vinyl acetate polymer low profile additives ordinarily have molecular weights within the range of from 10,000 to 250,000, and preferably from 25,000 to 175,000. They are usually employed in the curable molding compositions of this invention in proportions of from 5 to 25 weight percent. and preferably from 8 to 16 weight percent.

Suitable thermoplastic saturated polyester low profile additives are, in general, low molecular weight saturated polymers of polymerizable linear and/or cylic esters and carboxylated saturated polymers of said polymerizable esters having at least one carboxyl group per molecule.

Polymers of linear and/or cyclic esters, including carboxylated polymers having an average of at least one carboxyl group per molecule which may be used in accordance with the present invention are those which possess a reduced viscosity of at least 0.1, and preferably from 0.15 to 15 and higher. The preferred polymers of cyclic esters have a reduced viscosity of from 0.2 to 10.

Suitable polymers are further characterized by the following basic recurring structural Unit I

Unit I 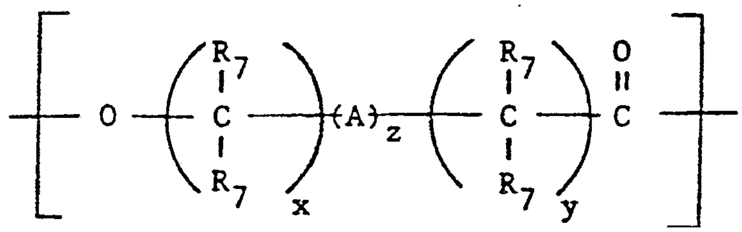

wherein each $R_7$, which can be the same or different, is hydrogen, halogen, i.e., chlorine, bromine, iodine, or fluorine, or a monovalent hydrocarbon radical generally containing a maximum of 12 carbon atoms, and preferably containing a maximum of eight carbon atoms. A is an oxy group, x is an integer having a value of 1 to 4 inclusive; y is an integer having a value of 1 to 4 inclusive; z is an integer having a value of 0 or 1, with the proviso that (a) the sum of $x + y + z$ is 4 to 6 inclusive and (b) the total number of $R_7$ variables which are substituents other than hydrogen does not exceed 2.

Illustrative of suitable monovalent hydrocarbon radicals for $R_7$ are the following: alkyl radicals such as methyl, ethyl, isopropyl, n-butyl, sec-butyl, t-butyl, n-hexyl, 2-ethylhexyl, n-dodecyl, chloroethyl and chloropropyl; alkoxy radicals such as methoxy, ethoxy, n-propoxy, n-hexoxy and n-dodecoxy; aryl radicals such as phenyl, ethyl phenyl, n-propylphenyl and n-butylphenyl; aryloxy radicals such as phenoxy, n-propylphenoxy and n-butylphenoxyl; cycloaliphatic radicals such as cyclopentyl and cyclohexyl.

In one embodiment, desirable polymers of cyclic esters are characterized by both basic recurring structural Unit I supra and basic recurring structural Unit II, as are obtained from a mixture containing a cyclic ester and a cyclic monomer such as ethylene oxide and propylene oxide.

Unit II 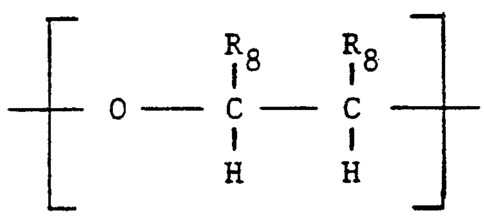

wherein each $R_8$, is as defined for $R_7$ of Unit I, or in which the two $R_8$ variables together with the ethylene moiety of the oxyethylene chain of Unit II form a saturated cycloaliphatic hydrocarbon ring having from four to eight carbon atoms inclusive. It is preferred that recurring Unit II contains from two to twelve carbon atoms inclusive. The interconnection of Unit I and Unit II does not involve or result in the direct bonding of two oxy groups i.e., -O-O-.

Particularly preferred polymers of cyclic esters are those which are characterized by the oxypentamethylene-carbonyl chain as seen in basic recurring structural Unit III

Unit III 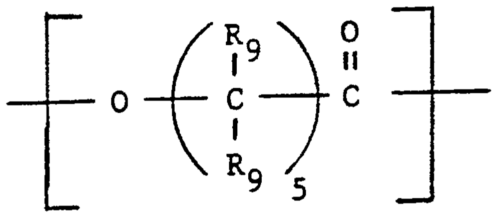

wherein each $R_9$ is hydrogen or lower alkyl, that is alkyl having a maximum of 4 carbon atoms, with the proviso that no more than three $R_9$ variables are substituents other than hydrogen.

Thermoplastic saturated polymers of linear and/or cyclic esters are well known and the carboxylated saturated esters are well known and such thermoplastic saturated polymers, and particularly polymers prepared from epsilon-caprolactones, have been advantageously employed as low profile additives. Reference, for example, is made to US-A-3,549,586 and 3,668,178 for descriptions of thermoplastic saturated polyester low profile additives and carboxylated thermoplastic saturated polyester low profile additives prepared from cyclic esters.

Also included are polyesters based on diacids, such as adipic acid, and diols, such as 1,6-hexanediol. These polyesters are described in, for example, US-A-3,909,483; 3,994,853; 2,736.278; and 3,929,868.

The thermoplastic saturated polyester low profile additives may usually be employed in the curable molding compositions of this invention in proportions similar to those of thermoplastic vinyl acetate polymers, i.e., in proportions of from 5 to 25 weight percent, and preferably from 8 to 16 weight percent.

Also suitable in certain aspects of this invention are thermoplastic polyalkyl acrylate or methacrylate low profile additives including, for example, homopolymers of methyl methacrylate, ethyl methacrylate, butyl methacrylate, methyl acrylate, ethyl acrylate; copolymers of methyl methacrylate and lower alkyl esters of acrylic and methacrylic acids; and copolymers of methyl methacrylate with minor amounts of one or more of the following: lauroyl methacrylate, isobornyl methacrylate, acrylamide, hydroxyethyl methacrylate, styrene, 2-ethylhexyl acrylate, acrylonitrile, methacrylic acid; polystyrene; styrene copolymers, such as, styrene/butadiene copolymers; cellulose acetate butyrate and alkylene oxide polymers.

The molecular weight of the alkyl acrylate or methacrylate polymers useful in the invention may vary over a wide range, from 10,000 to 1,000,000, and preferably from 25,000 to 500,000. The thermoplastic polyalkyl acrylate or methacrylate polymer should be present in the curable molding compositions of this invention in amounts ranging from 1 to 25 weight percent, and preferably from 5 to 20 weight percent.

Particularly suitable in certain aspects of this invention are thermoplastic polymer low profile additives including homopolymers of styrene and substituted styrene and also copolymers containing styrene. Such thermoplastic polymers are generally insoluble in many unsaturated polyester resins. In the resin systems of the present invention, these thermoplastic polymer low profile additves are soluble and form homogeneous molding compositions. The molecular weight of the polystyrene homopolymers or copolymers useful in this invention may vary over a wide range, showing melt flow values of from 1 to 50 grams per 10 minutes. The thermoplastic styrene polymer can be present in the curable molding compositions of this invention in amounts ranging from 5 to 25 weight percent and preferably from 8 to 16 weight percent.

The most preferred thermoplastic polymer low profile additives employed in the practice of this invention are polystyrene and a copolymer of vinyl acetate and acrylic acid.

The curable molding compositions of this invention also include as an ingredient therein unsubstituted or substituted meta- and/or para-divinylbenzene. The aromatic ring can be substituted with alkyl, alkoxy, aryl or arylalkyl groups having from 1 to 20 carbon atoms, or by hydroxy groups and halogens. The meta- and/or para-divinylbenzene ingredient is a uniquely effective crosslinking additive which improves shrinkage control during the curing reaction of the curable molding compositions and improves surface appearance quality of the reinforced thermoset resin products prepared therefrom.

Preferred types of unsubstituted or substituted meta- and/or para-divinylbenzene employed in the practice of this invention include unsubstituted meta-divinylbenzene, unsubstituted para-divinylbenzene and mixtures thereof. Commercial mixtures of these divinylbenzene isomers generally contain up to 50 weight percent of the corresponding ethylvinylbenzene isomers and are useful in the practice of this invention. The unsubstituted or substituted meta- and/or para-divinylbenzene can be present in the curable molding compositions of this invention in an amount of from 2 to 75 weight percent, preferably from 2 to 30 weight

percent.

A free radical initiator which initiates curing via the co-reaction of the poly(acrylate) and the ethylenically unsaturated monomer can also be included in the curable molding compositions of this invention. These initiators include azo compounds, peroxides, peresters, perketals, and mixtures thereof.

In a preferred embodiment, a free radical initiator mixture which initiates curing via the co-reaction of the poly(acrylate) and the ethylenically unsaturated monomer can also be included in the curable molding compositions of this invention. These initiator mixtures include azo compounds, peroxides, peresters and perketals. These initiator classes contain compounds which have 10-hour half-life temperatures ($t_{1/2}$) of greater than 90°C and also compounds which have 10-hour half-life temperatures ($t_{1/2}$) of less than 90°C. Initiators are often characterized in terms of their 10-hour half-life temperatures. i.e., the temperature at which one half of the initial concentration of initiator is deleted in 10 hours. The initiator mixtures suitable for use in the present invention include mixtures containing at least one initiator with a 10-hour half-life temperature ($t_{1/2}$) of greater than 90°C and at least one initiator with a 10-hour half-life temperature ($t_{1/2}$) of less than 90°C.

Azo and peroxide initiators are described by, for example. Gallagher et al. "Organic Peroxides Review, Plastics Design and Processing", July 1978, pages 38-42, and August 1978, pages 60-67, inclusive.

Preferred initiators suitable in the initiator mixtures employed in this invention include 1,1-di-t-butylperoxycyclohexane, 1,1-di-t-butylperoxy-3,3,5-trimethylcyclohexane, 2,2-di-t-butylperoxybutane, 2,2-di-t-butyl-peroxy-4-methyl-pentane, 2,2-dicumylperoxypropane, butyl 2,2-di-t-butylperoxyvalerate, 1,1-bis(2,2,4-trimethylpentyl-2-peroxy)-cyclohexane, 2,2'-azo-bis-isobutyronitrile, dibenzoyl peroxide, lauroyl peroxide, di-t-butyl peroxide, diisopropyl peroxide carbonate, t-butylperoxy-2-ethylhexanoate, t-butyl-perpivalate, 2,5-dimethylhexane-2,5-di-perethylhexanoate, t-butyl peroctoate, t-butyl perneodecanoate, t-butyl perbenzoate, t-butyl percrotonate, t-butyl perisobutyrate, di-t-butyl perphthalate, 1,1-bis(t-butylperoxy)-3,3,5-trimethylcyclohexane, bis(4-t-butyl-cyclohexyl) peroxydicarbonate, methyl ethyl ketone peroxide, 2,4-pentanedione peroxide, bis(t-butylperoxy) diisoprcpylbenzene, 2,4,4-trimethylpentyl-2-peroxycyclohexane carboxylate, 2-t-butylazo-2-cyano-4-methylpentane, ethyl-3,3-di(butylperoxy)-butyrate and 2,5-dimethyl-2,5-bis(2-ethylhexanoylperoxy) hexane. These are commercially available materials.

Numerous combinations of intiators may be selected provided the initiator mixture includes at least one initiator with a 10-hour half-life temperature ($t_{1/2}$) of greater than 90°C and at least one initiator with a 10-hour half-life temperature ($t_{1/2}$) of less than 90°C. The difference in the 10-hour half-life temperatures ($t_{1/2}$) of the selected initiators preferably should be greater than 10°C.

The preferred initiator mixtures of this invention containing at least one initiator with a 10-hour half-life temperature ($t_{1/2}$) of greater than 90°C and at least one initiator with a 10-hour half-life temperature ($t_{1/2}$) of less than 90°C include a mixture of tert-butyl perbenzoate ($t_{1/2}$ = 105°C) and tert-butyl peroctoate ($t_{1/2}$ = 73°C), a mixture of 1,1-di-t-butylperoxy-3,3,5-trimethylcyclohexane ($t_{1/2}$ = 92-96°C) and 2-t-butylazo-2-cyano-4-methylpentane ($t_{1/2}$ = 70°C) and a mixture of tert-butyl perbenzoate ($t_{1/2}$ = 105°C) and 2,5-dimethyl-2,5-bis(2-ethylhexanoylperoxy)hexane($t_{1/2}$ = 67°C) and other similar mixtures. The weight ratio of the initiators in the mixtures can vary over a wide range but the preferred initiator mixtures generally contain a major amount of at least one initiator with a 10-hour half-life temperature ($t_{1/2}$) of greater than 90°C and a minor amount of at least one initiator with a 10-hour half-life temperature ($t_{1/2}$) of less than 90°C.

The initiator mixtures containing peresters and/or perketals may be used in combination with an acid cure accelerator as described in NL-A-7604405. These acids include Bronsted acids with a $pK_a$ value lower than or equal to that of formic acid, such as hydrochloric acid, sulfuric acid, nitric acid, phosphoric acid, trichloroacetic acid and p-toluene-sulfonic acid. Also, Lewis acids or metal halides with Lewis acid properties, such as boron trifluoride and the chlorides of iron, cobalt, zinc and aluminum, may be used.

Additionally, the above described initiator mixtures may be used in combination with other cure accelerators such as cobalt compounds. These cobalt compounds include cobalt naphthenate, cobalt-amine cure promoters (such as those designated as PEP 183-S and available from Air Products Incorporated). These cure accelerators operate by decomposing the curing catalysts at a temperature below their normal activation or decomposition temperature.

The concentration of the initiator mixture in the curable molding compositions of this invention can be varied within wide limits. As a representative range, the concentration can vary from 0.1 to 5.0 weight percent, preferably from 0.5 to 2.5 weight percent, and most preferably, from 0.75 to 2.0 weight percent, based on the weight of the curable molding composition.

The curable molding compositions of this invention can also include one or more of the following: (i) a crosslinkable vinyl monomer having a reactivity ratio ($r_1$) with styrene of greater than one; (ii) an epoxy compound having at least one 1,2-epoxy group per molecule; and (iii) an unsaturated fatty acid ester. Mixtures of these ingredients are also suitable for use in the present invention. These ingredients are

uniquely effective additives which improve shrinkage control during the curing reaction of the curable molding compositions and improve the surface appearance quality of the reinforced thermoset resin products prepared therefrom.

The crosslinkable vinyl monomers suitable for use in the present invention have a reactivity ratio ($r_1$) with styrene of greater than 1. preferably greater than 5, and most preferably greater than 20. Measuring the reactivity ratios of monomers is well known in the art as described, for example, in F. W. Billmeyer, Jr., Textbook of Polymer Science, Wiley-Interscience, pages 329-331. The monomer reactivity ratios $r_1$ and $r_2$ are the ratios of the rate constant for a given radical adding its own monomer to that for its adding the other monomer. Thus $r_1>1$ means that the radical $M_1$ prefers to add $M_1$; $r_1<1$ means that it prefers to add $M_2$. In the system styrene ($M_1$)-methyl methacrylate ($M_2$), for example, $r_1=0.52$ and $r_2=0.46$. Each radical adds the other monomer about twice as fast as its own. Thus, methyl methacrylate is unsatisfactory as a crosslinkable vinyl monomer of this component in the molding compositions of this invention.

The following Table lists representative styrene-monomer reactivity ratios:

TABLE

| Monomer-1 | Monomer-2 | $r_1$ | $r_2$ |
|---|---|---|---|
| Styrene | Diethylfumarate | 0.30 | 0.07 |
| | Methyl Methacrylate | 0.52 | 0.46 |
| | Vinyl Acetate | 55 | 0.01 |
| | Vinyl Methyl Ether | 100 | 0.01 |
| | Vinyl Ethyl Ether | 90 | 0 |
| | Vinyl Nonanoate | 49.5 | 0.01 |
| | Vinyl Octadecanate | 68 | 0.01 |
| | Vinyl Stearate | 68 | 0.01 |
| | Vinyl Undecanoate | 29 | 0.02 |
| | Allyl Acetate | 90 | 0.00 |
| | Diethyl maleate | 6.52 | 0.005 |
| | Ethyl 2-Ethoxy-acrylate | 23.5 | ~0 |
| | Vinyl trimethoxy-silane | 22 | 0 |

Other monomers suitable for use in this invention include vinyl norbornene, vinyl stearate, butyl vinyl ether, diallyl phthalate, octene-1, octene-2, 1-nonene, 1-decene, dodecene, vinyl cyclohexene, bicyclononadiene, dicyclopentadiene, and a compound of the following formula:

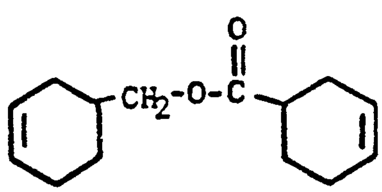

Mixtures of the above described monomers are also suitable for use in the present invention. Mixtures of vinyl acetate plus other crosslinkable vinyl monomers having a reactivity ratio ($r_1$) with styrene of greater than one are particularly preferred.

Preferred crosslinkable vinyl monomers having a reactivity ratio ($r_1$) with styrene of greater than one include vinyl acetate, dodecene, a mixture of 1-octene, 1-nonene and 1-decene, and a compound of the following formula:

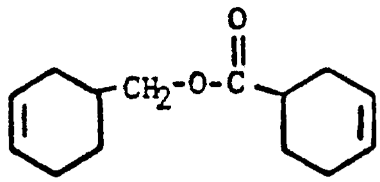

The crosslinkable vinyl monomer having a reactivity ratio ($r_1$) with styrene of greater than one can be present in the curable molding compositions of this invention in an amount of from 1 to 30 weight percent, preferably from 3 to 20 weight percent.

The epoxy compounds suitable for use in the present invention have at least one 1,2-epoxy group per molecule. The epoxy compounds can be based on aliphatic, cycloaliphatic or aromatic backbones. Thus, for example, bisphenol A based epoxy resins are included in the present invention.

One class of preferred epoxy compounds can be represented by the formula:

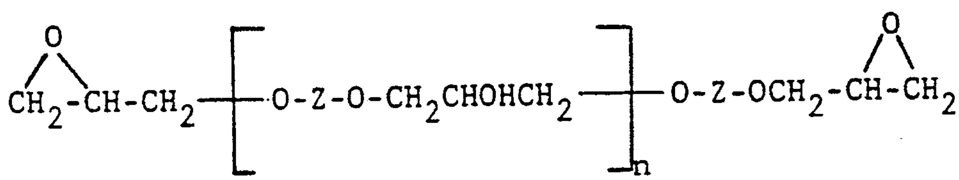

wherein n is an integer representing the number of repeating units and has a value of from 0 to 10 and Z is an arylene radical having from 6 to 20 carbon atoms.

The preferred arylene radical is

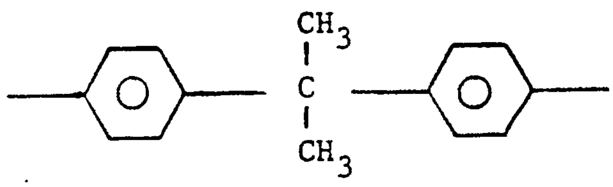

Still another preferred class of epoxy compounds are the 1,2-cycloaliphatic diepoxides. These epoxy compounds are exemplified by the following: 3,4-epoxycylohexylmethyl 3,4-epoxycyclohexane carboxylate having the formula:

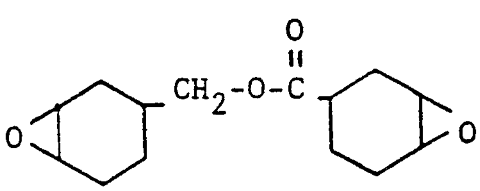

;

bis(2,3-epoxycyclopentyl)ether having the formula:

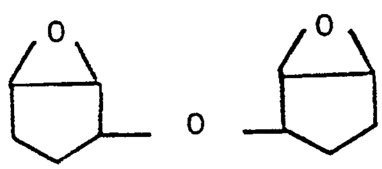

vinyl cyclohexene dioxide having the formula:

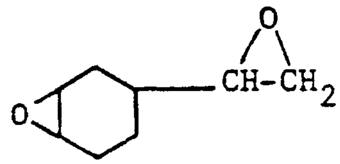

;

2-(3,4-epoxycyclohexyl-5,5-spiro)-(3,4 epoxy) cyclohexane-m-dioxane having the formula:

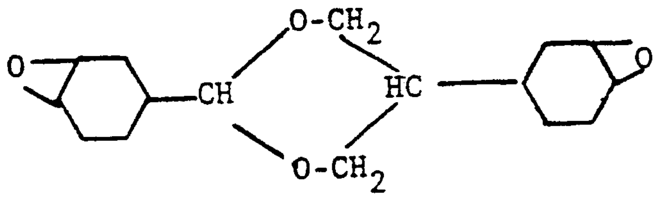

;

cyclohexylmethyl epoxycyclohexane carboxylate having the formula:

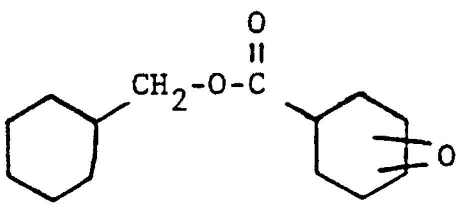

;

3-(3,4-epoxycyclohexane)-8,9-epoxy-2,4-dioxaspiro [5.5]-undecane having the formula:

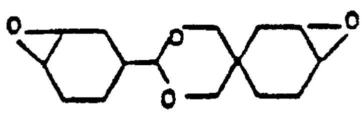

;

and bis(3,4-epoxy-cyclohexylmethyl) adipate having the formula:

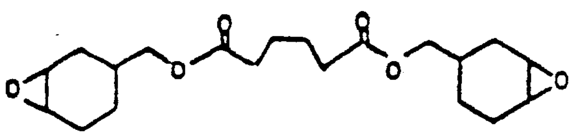

.

Other preferred epoxy compounds suitable for use in the present invention include epoxidized pentaerythritol tetratallate, epoxidized soy bean oil, octyl epoxytallate, epoxidized linseed oil.

Mixtures of the above-described epoxy compounds are also suitable for use in the present invention. Mixtures of vinyl acetate plus an epoxy compound having at least one 1,2-epoxy group per molecule are particularly preferred.

A general description of the preparation of epoxy compounds is presented in the Encyclopedia of Polymer Science and Technology, pp. 209-216, Vol. 6, Interscience Publishers, N.Y.C. 1967,

While the amount of epoxy compound used in the practice of this invention is not narrowly critical, it is preferred that the epoxy compound be present in the curable molding compositions of this invention in an amount of from 1 to 30 weight percent, most preferably from 3 to 20 weight percent.

The preferred unsaturated fatty acid esters suitable for use in the present invention include tall oil, soybean oil, linseed oil, tallates such as 2-ethylhexyl tallate, glycerol tallate, pentaerythritol tallate and

glycerol oleate. Mixtures of vinyl acetate plus an unsaturated fatty acid ester are particularly preferred for use in the present invention. The unsaturated fatty acid esters can be present in the curable molding compositions of this invention in an amount of from 1 to 30 weight percent, preferably from 3 to 20 weight percent.

The fibers suitable for use in this invention as reinforcing agents have a melting point or a glass transition temperature above 130°C. These fibers include fiberglass, carbon fibers, aromatic polyamide fibers (such as aramid fibers sold by E. I. duPont de Nemours Company, Wilmington, Delaware, under the trademark of Kevlar®), metal fibers, such as aluminum and steel fibers and boron fibers. The carbon fibers include those having a high Young's modulus of elasticity and high tensile strength. These carbon fibers may be produced from pitch as described in US-A-3,976,729, 4,005,183 and 4,026,788, for example. The fibers suitable for use in this invention preferably have a length of at least 0.635cm (1/4 inch) and an average length of at least 1.27cm (1/2 inch). Fibers with different lengths exceeding 0.635cm (1/4 inch inch) may be used provided that at least 50 percent of the fibers have lengths greater than 1.27cm (1/2 inch). Preferred fiber lengths are from 2.54 to 5.08cm or more 1 to 2 or more inches). Continuous filaments may also be used. It is also within the scope of this invention to include the use of fiber reinforcements of shorter lengths and also fillers such as milled glass.

The preferred fibers are fiberglass, carbon fibers, aromatic polyamide fibers, and mixtures thereof. The molded article contains from 10 to 75 weight percent, preferably from 15 to 60 weight percent of the reinforcement fiber therein or from 20 to 40 weight percent of milled glass reinforcement.

It is furthermore desirable to utilize a vinyl polymerization inhibitor in those cases where the curable molding composition is to be stored and/or shipped. Suitable vinyl polymerization inhibitors are hydroquinone, para-benzoquinone, t-butyl catechol, quinhydrone, toluhydroquinone, mono-t-butyl hydroquinone, 2,5-di-t-butylhydroquinone, hydroquinone monomethyl ether and the biphenol derivatives described in US-A-4,158,027. The amount of inhibitor for the purpose of preventing vinyl polymerization can be that conventionally used, namely from about 100 to about 1000 ppm of the total weight of the curable molding composition.

An optional component of the curable molding compositions of this invention is a viscosity reducing agent. In one aspect the invention employs, generally in combination with thermoplastic vinyl acetate polymer low profile additives and thermoplastic saturated polyester low profile additives, a viscosity reducing agent which is an aliphatic monocarboxylic acid having at least 6 carbon atoms.

The aliphatic monocarboxylic acid employed usually has at least 6 carbon atoms in the chain, and is frequently a saturated or unsaturated fatty acid having from 6 to 24 or more carbon atoms in the chain. Such carboxylic acids may be caproic (hexanoic), caprylic (octanoic), capric ($C_{10}$), lauric ($C_{12}$), myristic ($C_{14}$), palmitic ($C_{16}$), palmitoleic ($C_{16}$), stearic ($C_{18}$), oleic ($C_{18}$), linoleic ($C_{18}$), and lineolenic ($C_{18}$), and the acids may be either straight chain or branched chain. The viscosity reducing agent can be present in the curable molding compositions of this invention in amounts ranging from 0.4 to 6 weight percent, and preferably from 1 to 4 weight percent.

The curable molding compositions of this invention may also contain one or more of the known types of conventional additives, which are employed for their known purposes in the usual amounts. Illustrative of such additives are mold release agents or lubricants, pigments, fillers such as clay, hydrated alumina, silica, calcium carbonate and others known to the art. These additives can be dissolved or dispersed in the curable molding compositions to form a uniform mixture.

The curable molding compositions of this invention are prepared by solution blending a poly(acrylate), an ethylenically unsaturated monomer, a thermoplastic polymer low profile additive, unsubstituted or substituted meta-and/or para-divinylbenzene and any other ingredients at ambient temperature. Insoluble additives such as calcium carbonate filler can be effectively dispersed in the curable molding compositions. This mixture constitutes the "resin portion" which is a term used herein.

The fiber reinforced molded articles of this invention can be prepared by injecting the resin portion into a bed of one or more of the fibers at a temperature of from 120 to 150°C and pressure of from 0.69 to 41 MPa (100 to 600 psi). The upper limit of pressure is dependent upon the clamping characteristics of the press. When the poly(acrylate) and ethylenically unsaturated monomer are copolymerized, a "networklike" copolymer is produced which, in combination with the fiber reinforcement, possesses superior strength properties. The resulting fiber reinforced molded article also exhibits improved surface appearance resulting from the shrink controlling action of the thermoplastic polymer low profile additive.

A unique aspect of this invention is that an extremely rapid cure of the molding composition is achieved to produce a molded product. This rapid cure is achieved by heating the molding composition to a temperature which is sufficient to cause the initiation of the co-reaction of the poly(acrylate) and the ethylencially unsaturated monomer. This rapid cure results in completion of the molding operation, in less

than 2 minutes from the time the co-reaction is initiated.

The rapid process for making high performance reinforced thermoset molded articles comprises forming a mixture of (a) one or more fibers with a melting point or a glass transition temperature above 130 °C and (b) the resin portion as described above. The mixture is provided into a heatable mold and molding of the mixture is effected at a temperature sufficient to cause the initiation of the co-reaction of the poly(acrylate) with the ethylenically unsaturated monomer at a temperature not greater than 150 °C and the completion of molding in less than 2 minutes from the time of initiation of said co-reaction.

In a preferred process for such rapid fabrication of a fiber reinforced molded article from the curable molding compositions of this invention, the fiber reinforcement is comprised of one or more fibers with a melting point or a glass transition temperature above 130 °C. The process comprises the steps of (a) providing in a heatable matched metal die mold, a bonded web of one or more of said fibers. (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom.

The preferred apparatus for use in preparing fiber reinforced molded articles from curable molding compositions in accordance with this invention comprises: (a) a heatable matched metal die mold containing one or more cavities therein with means for opening said mold to expose such cavities, and closing the same, and means for controlling the injection of a thermosettable organic liquid to such cavities when the mold is closed, (b) means associated with said mold, whereby one or more fibers in the form of an interlocked mass are provided in a portion of the cavities thereof when the mold is open to expose such cavities and prior to the injection of the thermosettable organic liquid to such cavities when the mold is closed, (c) accumulator means associated with said mold which can contain a thermosettable liquid transportable to means for controlling injection of said liquid to such cavities, and (d) cooling means associated with the means for controlling the injection of such liquid to such cavities, whereby the temperature of the liquid in such injection means is maintained substantially below the temperature of the mold.

The following examples are illustrative of the present invention and are not intended as a limitation upon the scope thereof. The non-reinforced cured castings and cured glass reinforced composites were prepared and evaluated according to the following procedures.

Cure Shrinkage: determined by measuring the change in density between the liquid resin mixture prior to cure and a non-reinforced solid casting after cure. The castings were prepared by the preferred rapid fabrication molding process described hereinabove except that no reinforcement was contained in the mold. The density of the uncured liquid resin mixture was determined by measuring the liquid resin mixture weight in a tared volumetric flask. The liquid resin mixture was equilibrated in a 25 °C bath before weighing. The density of the cured solid casting was determined by breaking the solid casting by hand into smaller fragments which were weighed on a triple beam balance. The same fragments were then suspended in water and weighed on a triple beam balance (a thin wire platform was suspended from the triple beam balance, tared in water and the casting fragments were then placed on the platform and weighed). The volume of the cured solid casting was determined as the water displaced or

$V = W_{dry\ solid} - W_{solid\ in\ water}$ and the density of the cured solid casting as

$$d_{solid} = \frac{W_{dry\ solid}}{V}$$

The cure shrinkage in percent was determined as

$$\text{Percent Cure Shrinkage} = \frac{d_{solid} - d_{liquid}}{d_{solid}} \times 100$$

Solid casting fragments which floated were weighted with about 2 grams of copper wire and the volume of the cured solid casting was determined as

$V = W_{dry\ solid} - W_{copper} - (W_{copper}/8.92) - W_{solid\ in\ water}$ where 8.92 is the density of copper.

The abbreviations used above have the indicated meanings: d = density; W = weight and V = volume. In the following examples and comparative examples, a plus (+) sign before the average cure shrinkage value indicates cure expansion.

Surface Appearance: determined visually by comparing the surface of a cured glass reinforced composite of this invention with the surface of a control cured glass reinforced composite. Improved surface appearance of the cured glass reinforced composites of this invention was manifested in any of several ways such as the absence or reduction of warpage, undulations, reflected image waviness, fiber prominence or similar defects in comparison with the surface appearance of the control cured glass reinforced composites.

Viscosity: determined on a Brookfield model LVF viscometer using a #3 spindle or a #4 spindle at 60 revolutions per minute. The curable resin systems were equilibrated at 25 °C before measuring the viscosity.

In certain of the following examples and comparative examples, a thermocouple was inserted into the 25.4cm x 14 cm x 0.25 cm (10 inch x 5 1/2 inch x 1/10 inch) constant volume mold and the cure rate was observed by measuring the time from resin injection to the time of maximum exotherm in the resin. This time span is designated below as the time to peak exotherm and the time given is an average of several runs.

Example 1

Into a 25.4cm x 14.0cm x 0.25cm (10 inch x 5 1/2 inch x 1/10 inch) constant volume mold preheated to 140 °C was injected a resin portion containing a mixture of 50 parts by weight of ethoxylated bisphenol A dimethacrylate, 40 parts by weight of styrene, 10 parts by weight of a divinylbenzene mixture designated as DVB-55 containing about 40 weight percent meta-divinylbenzene, 15 weight percent para-divinylbenzene, 30 weight percent meta-ethylvinylbenzene and 10 weight percent para-ethylvinylbenzene commercially available from Dow Chemical Company, Midland, Michigan. 43 parts by weight of BAKELITE® LP-40A which is a thermoplastic copolymer low profile additive of vinyl acetate and acrylic acid (40 weight percent) dissolved in styrene (60 weight percent) commercially available from Union Carbide Corporation, Danbury, Connecticut, 0.72 parts by weight of Zelec® UN mold release which is an organophosphate mold release commercially available for E.I. duPont de Nemours, Wilmington, Delaware, and 2.15 parts by weight of Trigonox® 29-B75 initiator which is 1,1-di-t-butylperoxy-3-3,5-trimethylcyclohexane commercially available from Noury Chemical Corporation, Burt, New York. The curable resin portion had a viscosity at 25 °C of 98 mPa•s (centipoise). The Zelec® UN mold release constituted 0.5 parts per hundred parts of the resin portion and the Trigonox® 29-B75 initiator constituted 1.5 parts per hundred parts of the resin portion. The constant volume mold was closed and evacuated for about 5 seconds prior to injection of the resin portion. The resin portion was injected into the mold at a pressure of 2.07 MPa (300 pounds per square inch) and this injection pressure was maintained for a dwell period of 5 to 20 seconds. After 45 to 160 seconds. the cured casting was removed from the mold. The average cure shrinkage of this resin system was determined to be 3.7 percent. The cured casting was white and opaque in appearance.

Example 2

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 40 parts by weight |
| DVB-75 | 10 parts by weight |
| BAKELITE® LP-40A | 43 parts by weight |
| Zelec® UN mold release | 0.72 parts by weight |
| Trigonox® 29-B75 initiator | 2.15 parts by weight |

DVB-75 is a divinylbenzene mixture containing about 54 weight percent meta-divinylbenzene, 23 weight percent para-divinylbenzene, 14 weight percent meta-ethylvinylbenzene and 6 weight percent para-ethylvinylbenzene commercially available from Dow Chemical Company, Midland, Michigan.

The average cure shrinkage of this resin system was determined to be 3.5 percent. The curable resin system had a viscosity at 25°C of 100 mPa•s (centipoise) and the cured casting was white and opaque in appearance.

Example 3

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 30 parts by weight |
| DVB-75 | 20 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 1.1 percent. The curable resin system had a viscosity at 25°C of 105 mPa•s (centipoise) and the cured casting was white and opaque in appearance.

Example 4

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 30 parts by weight |
| DVB-75 | 20 parts by weight |
| Neulon® S | 43 parts by weight |
| Zelec® UN mold release | 0.72 parts by weight |
| Trigonox® 29-B75 initiator | 2.15 parts by weight |

Neulon®S is a modified carboxylated polyvinyl acetate thermoplastic polymer low profile additive

solution commercially available from Union Carbide Corporation, Danbury, Connecticut.

The average cure expansion of this resin system was determined to be +0.3 percent. The curable resin system had a viscosity at 25°C of 90 mPa•s (centipoise) and the cured casting was white and opaque in appearance.

Example 5

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 30 parts by weight |
| DVB-75 | 20 parts by weight |
| Neulon® T | 43 parts by weight |
| Zelec® UN mold release | 0.72 parts by weight |
| Trigonox® 29-B75 initiator | 2.15 parts by weight |

Neulon®T is a modified carboxylated polyvinyl acetate thermoplastic polymer low profile additive solution commercially available from Union Carbide Corporation, Danbury, Connecticut.

The average cure shrinkage of this resin system was determined to be 1.6 percent. The curable resin system had a viscosity at 25°C of 80 mPa•s (centipoise) and the cured casting was white and opaque in appearance.

Example 6

The preparation of the resin system and cured casting in Example 1 was repeated with the exception that the following ingredients were used in the following amounts:

| | |
|---|---|
| Ethoxylated bisphenol A dimethacrylate | 50 parts by weight |
| DVB-55 | 20 parts by weight |
| Hydroxyethyl methacrylate | 15 parts by weight |
| Styrene | 15 parts by weight |
| LPA Solution 3500 | 43 parts by weight |
| Zelec® UN mold release | 0.72 parts by weight |
| Trigonox® 29-B75 initiator | 2.15 parts by weight |

LPA Solution 3500 is a solution of 40 weight percent polystyrene SMD 3500 obtained from Union Carbide Corporation, Danbury, Connecticut, and 60 weight percent styrene.

The average cure shrinkage of this resin system was determined to be 7.1 percent. The curable resin system had a viscosity at 25°C of 296 mPa•s (centipoise) and the cured casting was white and opaque in appearance.

Example 7

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| DVB-75 | 20 parts by weight |
| Hydroxyethyl methacrylate | 15 parts by weight |
| LPA Solution 3500 | 43 parts by weight |
| Zelec® UN mold release | 0.72 parts by weight |
| Trigonox® 29-B75 initiator | 2.15 parts by weight |

The average cure shrinkage of this resin system was determined to be 3.4 percent. The curable resin system had a viscosity at 25°C of 263 mPa•s (centipoise) and the cured casting was white and opaque in appearance.

Example 8

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| DVB-75 | 20 parts by weight |
| Hydroxyethyl methacrylate | 15 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 4.4 percent. The curable resin system had a viscosity at 25°C of 157 mPa•s (centipoise) and the cured casting was white and opaque in appearance.

Example 9

The preparation of the resin system and cured casting in Example 1 was repeated with the exception that the following ingredients were used in the following amounts:

| | |
|---|---|
| Ethoxylated bisphenol A dimethacrylate | 50 parts by weight |
| Styrene | 15 parts by weight |
| DVB-75 | 20 parts by weight |
| Hydroxyethyl methacrylate | 15 parts by weight |

| | |
|---|---|
| Neulon® S | 43 parts by weight |
| Zelec® UN mold release | 0.72 parts by weight |
| Trigonox® 29-B75 initiator | 2.15 parts by weight |

The average cure shrinkage of this resin system was determined to be 2.4 percent. The curable resin system had a viscosity at 25° C of 174 mPa•s (centipoise) and the cured casting was white and opaque in appearance.

Example 10

The preparation of the resin system and cured casting in Example 1 was repeated with the exception that the following ingredients were used in the following amounts:

| | |
|---|---|
| Ethoxylated bispenol A dimethacrylate | 50 parts by weight |
| Styrene | 15 parts by weight |
| DVB-75 | 20 parts by weight |
| Hydroxyethyl methacrylate | 15 parts by weight |
| Neulon® T | 43 parts by weight |
| Zelec® UN mold release | 0.72 parts by weight |
| Trigonox® 29-B75 initiator | 2.15 parts by weight |

The average cure shrinkage of this resin system was determined to be 3.3 percent. The curable resin system had a viscosity at 25° C of 134 mPa•s (centipoise) and the cured casting was white and opaque in appearance.

Comparative Example A

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Styrene | 50 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 5.1 percent. The curable resin system had a viscosity at 25° C of 92 mPa•s (centipoise) and the cured casting was white and opaque in appearance.

Comparative Example B

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 60 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 5.1 percent. The curable resin system had a viscosity at 25°C of 143 mPa•s (centipoise) and the cured casting was white and opaque in appearance.

Comparative Example C

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 70 parts by weight |
| Styrene | 30 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 6.9 percent. The curable resin system had a viscosity at 25°C of 270 mPa•s (centipoise) and the cured casting was white and opaque in appearance.

Comparative Example D

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Trimethylolpropane triacrylate | 10 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 6.6 percent. The curable resin system had a viscosity at 25°C of 84 mPa•s (centipoise) and the cured casting was white and opaque in appearance.

Comparative Example E

The preparation of the resin system and cured casting in Example 1 was repeated with the exception that divinylbenzene was not included in the resin system and that the following ingredients wer e used in the following amounts:

| | |
|---|---|
| Ethoxylated bisphenol A dimethacrylate | 50 parts by weight |
| Trimethylolpropane triacrylate | 20 parts by weight |
| Styrene | 30 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 5.5 percent. The curable resin system had a viscosity at 25° C of 74 mPa•s (centipoise) and the cured casting was white and opaque in appearance.

Comparative Example F

The preparation of the resin system and cured casting in Example 1 was repeated with the exception that divinylbenzene was not incuded in the resin system and that the following ingredients were used in the following amounts:

| | |
|---|---|
| Ethoxylated bisphenol A dimethacrylate | 50 parts by weight |
| Trimethylolpropane trimethacrylate | 10 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 4.1 percent. The curable resin system had a viscosity at 25° C of 74 mPa•s (centipoise) and the cured casting was white and opaque in appearance.

Comparative Example G

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Trimethylolpropane trimethyacrylate | 20 parts by weight |
| Styrene | 30 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 3.8 percent. The curable resin system had a viscosity at 25° C of 108 mPa•s (centipoise) and the cured casting was white and opaque in appearance.

Comparative Example H

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Allyl acrylate | 10 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 6.8 percent. The curable resin system had a viscosity at 25° C of 94 mPa•s (centipoise) and the cured casting was white and opaque in appearance.

Comparative Example I

The preparation of the resin system and cured casting in Example 1 was repeated with the exception that divinylbenzene was not included in the resin system and that the following ingredients were used in the following amounts:

| | |
|---|---|
| Ethyoxylated bisphenol A dimethacrylate | 50 parts by weight |
| Allyl methacrylate | 10 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 7.6 percent. The curable resin system had a viscosity at 25° C of 96 mPa•s (centipoise) and the cured casting was white and opaque in appearance.

Comparative Example J

The preparation of the resin system and cured casting in Example 1 was repeated with the exception that divinylbenzene was not included in the resin mixture and that the following ingredients were used in the following amounts:

| | |
|---|---|
| Ethoxylated bisphenol A dimethacrylate | 50 parts by weight |
| Dipentaerythritol pentacrylate | 10 parts by weight |
| Styrene | 40 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 3.4 percent. The curable resin system had a viscosity at 25° C of 162 mPa•s (centipoise) and the cured casting was white and opaque in appearance.

Comparative Example K

The preparation of the resin system and cured casting in Example 1 was repeated with the exception that divinylbenzene was not included in the resin mixture and that the following ingredients were used in the following amounts:

| | |
|---|---|
| Ethoxylated bisphenol A dimethacrylate | 50 parts by weight |
| Styrene | 50 parts by weight |
| Neulon® S | 43 parts by weight |
| Zelec® UN mold release | 0.72 parts by weight |
| Trigonox® 29-B75 initiator | 2.15 parts by weight |

The average cure shrinkage of this resin system was determined to be 3.7 percent. The curable resin

system had a viscosity at 25 °C of 62 mPa•s (centipoise) and the cured casting was white and opaque in appearance.

Comparative Example L

The preparation of the resin system and cured casting in Example 1 was repeated with the exception that the divinylbenzene was not included in the resin system and that the following ingredients were used in the following amounts:

| | |
|---|---|
| Ethoxylated bisphenol A dimethacrylate | 50 parts by weight |
| Styrene | 50 parts by weight |
| Neulon® T | 43 parts by weight |
| Zelec® UN mold release | 0.72 parts by weight |
| Trigonox® 29-B75 initiator | 2.15 parts by weight |

The average cure shrinkage of this resin system was determined to be 8.2 percent. The curable resin system had a viscosity at 25 °C of 70 mPa•s (centipoise) and the cured casting was white and opaque in appearance.

Comparative Example M

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Trimethylolpropane triacrylate | 20 parts by weight |
| Hydroxyethyl methacrylate | 15 parts by weight |
| Styrene | 15 parts by weight |
| LPA Solution 3500 | 43 parts by weight |
| Zelec® UN mold release | 0.72 parts by weight |
| Trigonox® 29-B75 initiator | 2.15 parts by weight |

The average cure shrinkage of this resin system was determined to be 9.5 percent. The curable resin system had a viscosity at 25 °C of 484 mPa•s (centipoise) and the cured casting was white and opaque in appearance.

Comparative Example N

The preparation of the resin system and cured casting in Example 1 was repeated with the exception that the divinylbenzene was not included in the resin system and that the following ingredients were used in the following amounts:

| | |
|---|---|
| Ethoxylated bisphenol A dimethacrylate | 50 parts by weight |
| Trimethylolpropane trimethacrylate | 20 parts by weight |
| Hydroxyethyl methacrylate | 15 parts by weight |
| Styrene | 15 parts by weight |
| LPA Solution 3500 | 43 parts by weight |
| Zelec® UN mold release | 0.72 parts by weight |
| Trigonox® 29-B75 initiator | 2.15 parts by weight |

The average cure shrinkage of this resin system was determined to be 10.0 percent. The curable resin system had a viscosity at 25° C of 442 mPa•s (oentipoise) and the cured casting was white and opaque in appearance.

Comparative Example O

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Ethylene glycol dimethacrylate | 20 parts by weight |
| Hydroxyethyl methacrylate | 15 parts by weight |
| Styrene | 15 parts by weight |
| LPA Solution 3500 | 43 parts by weight |
| Zelec® UN mold release | 0.72 parts by weight |
| Trigonox® 29-B75 initiator | 2.15 parts by weight |

The average cure shrinkage of this resin system was determined to be 10.2 percent. The curable resin system had a viscosity at 25° C of 364 mPa•s (centipoise) and the cured casting was white and opaque in appearance.

Comparative Example P

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Hydroxyethyl methacrylate | 22 parts by weight |
| Styrene | 28 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 10.0 percent. The curable resin system had a viscosity at 25°C of 148 mPa•s (centipoise) and the cured casting was white and opaque in appearance.

Comparative Example Q

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Hydroxyethyl methacrylate | 22 parts by weight |
| Styrene | 28 parts by weight |
| Neulon® S | 43 parts by weight |
| Zelec® UN mold release | 0.72 parts by weight |
| Trigonox® 29-B75 initiator | 2.15 parts by weight |

The average cure shrinkage of this resin system was determined to be 8.3 percent. The curable resin system had a viscosity at 25°C of 112 mPa•s (centipoise) and the cured casting was white and opaque in appearance.

Comparative Example R

The preparation of the resin system and cured casting in Example 1 was repeated with the exception that divinylbenzene was not included in the resin system and that the following ingredients were used in the following amounts:

| | |
|---|---|
| Ethoxylated bisphenol A dimethacrylate | 50 parts by weight |
| Hydroxyethyl methacrylate | 22 parts by weight |
| Styrene | 28 parts by weight |
| Neulon® T | 43 parts by weight |
| Zelec® UN mold release | 0.72 parts by weight |
| Trigonox® 29-B75 initiator | 2.15 parts by weight |

The average cure shrinkage of this resin system was determined to be 9.8 percent. The curable resin system had a viscosity at 25°C of 110 mPa•s (centipoise) and the cured casting was white and opaque in appearance.

The resin systems of Examples 1 through 5 containing a thermoplastic polymer low profile additive and meta- and/or para- divinylbenzene as essential ingredients therein exhibited improved cure shrinkage control in comparison with the resin systems of Comparative Examples A through L in which meta- and/or para- divinylbenzene was not included as an essential ingredient therein. The resin systems of Examples 6 through 10 containing a thermoplastic polymer low profile additive and meta-and/or para- divinylbenzene as essential ingredients therein also exhibited improved cure shrinkage control in comparison with the resin systems of Comparative Examples M through R in which meta and/or para- divinylbenzene was not included as as essential ingredient therein. The addition of other poly(acrylates) and other polymerizable materials to increase cross-link density generally did not provide shrinkage improvements similar to those obtained by the use of meta- and/or para-divinylbenzene (see Comparative Examples D through J and M through R). The polymerization characteristics of meta- and/or para- divinylbenzene are distinct from those

of the poly(acrylates) and are a probable explanation for this difference in performance. Only the very highly functionalized dipentaerythritol pentacrylate did show improvement in shrink control similar to that observed with meta- and/or para-divinylbenzene (see Comparative Example J).

The following examples illustrate the preparation of reinforced composites from the molding compositions of this invention.

Example 11

The preparation of the resin system and molding procedure in Example 4 was repeated with the exception that approximately 48 grams of AKM random glass mat commercially available from PPG Industries, Inc.. Pittsburgh, Pennsylvania, was placed in the 25.4cm x 14.0cm x 0.25cm (10 inch x 5 1/2 inch x 1/10 inch) constant volume mold prior to closing, evacuating and injecting the mold. The injection time was 26 seconds and the injection pressure of 2.07 MPa 300 pounds per square inch) was maintained for a dwell period of 20 seconds. After 80 seconds following injection, the resulting cured glass reinforced composite containing about 42 weight percent glass was removed from the mold. The cured glass reinforced composite was white and opaque in appearance.

Example 12

The preparation of the resin system and molding procedure in Example 5 was repeated with the exception that approximately 47 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 26 seconds and the injection pressure of 2.08 (300 pounds per square inch) was maintained for a dwell period of 20 seconds. After 80 seconds following injection, the resulting cured glass reinforced composite containing about 40 weight percent glass was removed from the mold. The cured glass reinforced composite was white and opaque in appearance.

Example 13

The preparation of the resin system and molding procedure in Example 8 was repeated with the exception that approximately 47 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 21 seconds and the injection pressure of 2.07 MPa (300 pounds per square inch) was maintained for a dwell period of 20 seconds. After 65 seconds following injection, the resulting cured glass reinforced composite containing about 39 weight percent glass was removed from the mold. The cured glass reinforced composite was white and opaque in appearance.

Example 14

The preparation of the resin system and molding procedure in Example 8 was repeated with the exception that approximately 47 grams of OCF M-8608 swirl glass mat commercially available from Owens-Corning Fiberglass Corporation, Toledo, Ohio, was placed in the 25.4cm x 14.0cm x 0.25cm (10 inch x 5 1/2 inch x 1/10 inch) constant volume mold prior to closing, evacuating and injecting the mold. The injection time was 18 seconds and the injection pressure of 2.07 MPa (300 pounds per square inch) was maintained for a dwell period of 20 seconds. After 65 seconds following injection, the resulting cured glass reinforced composite containing 41 weight percent glass was removed from the mold. The cured glass reinforced composite was white and opaque in appearance.

Example 15

The preparation of the resin system and molding procedure in Example 8 was repeated with the exception that approximately 46 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 17 seconds and the injection pressure of 2.07 MPa (300 pounds per square inch) was maintained for a dwell period of 20 seconds. After 65 seconds following injection, the resulting cured glass reinforced composite containing about 40 weight percent glass was removed from the mold. The cured glass reinforced composite was white and opaque in appearance.

Example 16

The preparation of the resin system and molding procedure in Example 9 was repeated with the exception that approximately 47 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 25 seconds and the injection pressure of 2.07 MPa (300 pounds per square inch) was maintained for a dwell period of 20 seconds. After 80 seconds following injection, the resulting cured glass reinforced composite containing about 40 weight percent glass was removed from the mold. The cured glass reinforced composite was white and opaque in appearance.

Example 17

The preparation of the resin system and molding procedure in Example 10 was repeated with the exception that approximately 47 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 23 seconds and the injection pressure of 2.07 MPa (300 pounds per square inch) was maintained for a dwell period of 20 seconds. After 80 seconds following injection, the resulting cured glass reinforced composite containing 39 weight percent glass was removed from the mold. The cured glass reinforced composite was white and opaque in appearance.

Comparative Example S

The preparation of the resin system and molding procedure in Comparative Example K was repeated with the exception that approximately 49 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 56 seconds and the injection pressure of 2.07 MPa (300 pounds per square inch) was maintained for a dwell period of 20 seconds. After 80 seconds following injection, the resulting cured glass reinforced composite containing about 41 weight percent glass was removed from the mold. The cured glass reinforced composite was white and opaque in appearance.

Comparative Example T

The preparation of the resin system and molding procedure in Comparative Example L was repeated with the exception that approximately 46 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 40 seconds and the injection pressure of 2.07 MPa (300 pounds per square inch) was maintained for a dwell period of 20 seconds. After 80 seconds following injection, the resulting cured glass reinforced composite containing 37 weight percent glass was removed from the mold. The cured glass reinforced composite was white and opaque in appearance.

Comparative Example U

The preparation of the resin system and molding procedure in Comparative Example P was repeated with the exception that approximately 48 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 18 seconds and the injection pressure of 2.07 MPa (300 pounds per square inch) was maintained for a dwell period of 20 seconds. After 65 seconds following injection, the resulting cured glass reinforced composite containing about 40 weight percent glass was removed from the mold. The cured glass reinforced composite was white and opaque in appearance.

Comparative Example V

The preparation of the resin system and molding procedure in Comparative Example P was repeated with the exception that approximately 47 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 19 seconds and the injection pressure of 2.07 MPa (300 pounds per square inch) was maintained for a dwell period of 20 seconds. After 65 seconds following injection, the resulting cured glass reinforced composite containing 40 weight percent glass was removed from the mold.

The cured glass reinforced composite was white and opaque in appearance.

Comparative Example W

The preparation of the resin system and molding procedure in Comparative Example P was repeated with the exception that approximately 44 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 18 seconds and the injection pressure of 2.07 MPa (3000 pounds per square inch) was maintained for a dwell period of 20 seconds. After 65 seconds following injection, the resulting cured glass reinforced composite containing about 37 weight percent glass was removed from the mold. The cured glass reinforced composite was white and opaque in appearance.

Comparative Example X

The preparation of the resin system and molding procedure in Comparative Example Q was repeated with the exception that approximately 46 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 28 seconds and the injection pressure of 2.07 MPa (300 pounds per square inch) was maintained for a dwell period of 20 seconds. After 80 seconds following injection, the resulting cured glass reinforced composite containing about 38 weight percent glass was removed from the mold. The cured glass reinforced composite was white and opaque in appearance.

Comparative Example Y

The preparation of the resin system and molding procedure in Comparative Example R was repeated with the exception that approximately 47 grams of AKM random glass mat was placed in the 25.4cm x 14.0cm x 0.25cm (10 inch x 5 1/2 inch x 1/10 inch) constant volume mold prior to closing, evacuating and injecting the mold. The injection time was 24 seconds and the injection pressure of 2.07 MPa (300 pounds per square inch) was maintained for a dwell period of 20 seconds. After 80 seconds following injection, the resulting cured glass reinforced composite containing about 39 weight percent glass was removed from the mold. The cured glass reinforced composite was white and opaque in appearance.

The cured glass reinforced composites of Examples 11 through 17 exhibited generally improved surface appearance in comparison with the surface appearance of the cured glass reinforced composites of Comparative Examples S through Y in which meta-and/or para-divinylbenzene was not included therein.

Example 18

Into a 25.4cm x 14.0cm x 0.25cm (10 inch x 5 1/2 inch x 1.10 inch) constant volume mold preheated to 140° C was injected a resin portion containing a mixture of 50 parts by weight of ethoxylated bisphenol A dimethacrylate, 15 parts by weight of styrene, 15 parts by weight of a divinylbenzene mixture designated as DVB-55 containing 40 weight percent meta-divinylbenzene. 15 weight percent para-divinylbenzene, 30 weight percent meta-ethylvinylbenzene and 10 weight percent para-ethylvinylbenzene commercially available from Dow Chemical Company, Midland, Michigan, 10 parts by weight of hydroxyethyl methacrylate, 10 parts by weight of vinyl acetate, 43 parts by weight of BAKELITE® LP-40A which is a thermoplastic copolymer low profile additive of vinyl acetate and acrylic acid (40 weight percent) dissolved in styrene (60 weight percent) commercially available from Union Carbide Corporation. Danbury, Connecticut, 0.72 parts by weight of Zelec® UN mold release which is an organophosphate mold release commercially available for E.I. dupont de Nemours, Wilmington, Delaware, 1.86 parts by weight of Trigonox® 29-B75 initiator which is 1,1-di-t-butylperoxy-3-3,5-trimethylcyclohexane having a 10-hour half-life temperature ($t_{1/2}$) of 92-96° C and commercially available from Noury Chemical Corporation, Burt, New York and 0.29 parts by weight of Luazo® 70 initiator which is 2-t-butylazo-2-cyano-4-methylpentane having a 10-hour half-life temperature ($t_{1/2}$) of 70° C and commercially available from the Lucidol Division of Pennwalt Corporation, Buffalo, New York. The curable resin portion had a viscosity of 112 mPa•s (centipoise) at 25° C. The Zelec® UN mold release constituted 0.5 parts per hundred parts of resin portion and the initiator mixture of Trigonox® 29-B75 and Luazo® 70 constituted 1.5 parts per hundred parts of resin portion. The constant volume mold was closed and evacuated for about 5 seconds prior to injection of the resin portion. The resin portion was injected into the mold at a pressure of 2.07 MPa (300 pounds per square inch) and this injection pressure

was maintained for a dwell period of 5 to 20 seconds. A time to peak exotherm of about 34 seconds was measured for this resin system. After 45 to 160 seconds, the cured casting was removed from the mold. The average cure expansion of this resin system was determined to be + 0.3 percent. The cured casting was white and opaque in appearance.

Example 19

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP-40A | 43 parts by weight |
| Zelec® UN mold release | 0.72 parts by weight |
| Tert-butylperbenzoate initiator | 1.57 parts by weight |
| Tert-butylperoctoate initiator | 0.57 parts by weight |

Tert-butyl perbenzoate initiator has a 10-hour half-life temperature ($t_{1/2}$) of 105° C and is commercially available from the Lucidol Division of Pennwalt Corporation. Buffalo, New York. Tert-butyl peroctoate initiator has a 10-hour half-life temperature ($t_{1/2}$) of 73° C and is commercially available from the Lucidol Division of Pennwalt Corporation, Buffalo, New York.

The average cure expansion of this resin system was determined to be +2.7 percent. The average peak time to exotherm was 39 seconds. The curable resin system had a viscosity at 25° C of 148 mPa•s (centipoise) and the cured casting was white and opaque in appearance.

Example 20

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP-40A | 43 parts by weight |
| Zelec® UN mold release | 0.72 parts by weight |
| Tert-butylperbenzoate initiator | 3.15 parts by weight |
| Tert-butylperoctoate initiator | 1.14 parts by weight |

The average cure expansion of this resin system was determined to be +4.9 percent. The average peak time to exotherm was 30 seconds. The cured casting was white and opaque in appearance.

Example 21

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| Trigonox® 29-B75 initiator | 1.86 parts by weight |
| Luazo® 70 initiator | 0.29 parts by weight |

LPA Solution 210 is a solution of 40 weight percent polystyrene PS-210 commercially available from Shell Oil Company, Houston, Texas, and 60 weight percent styrene.

The average cure shrinkage of this resin system was determined to be 1.2 percent. The average peak time to exotherm was 42 seconds. The curable resin system had a viscosity at 25°C of 148 mPa•s (centipoise) and the cured casting was white and opaque in appearance.

Example 22

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| Tert-butyl perbenzoate initiator | 1.57 parts by weight |
| Tert-butyl peroctoate initiator | 0.57 parts by weight |

The average cure expansion of this resin system was determined to be +0.7 percent. The average peak time to exotherm was 39 seconds. The curable resin system had a viscosity at 25°C of 163 mPa•s (centipoise) and the cured casting was white and opaque in appearance.

Examples 23

The preparation of the resin system and cured casting in Example 18 was repeated with the exception

that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 67 parts by weight |
| Zelec® UN mold release | 0.84 parts by weight |
| Tert-butyl perbenzoate initiator | 1.84 parts by weight |
| Tert-butyl peroctoate initiator | 0.67 parts by weight |

The average cure expansion of this resin system was determined to be +2.3 percent. The cured casting was white and opaque in appearance.

Example 24

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 67 parts by weight |
| Zelec® UN mold release | 0.84 parts by weight |
| Tert-butylperbenzoate initiator | 1.84 parts by weight |
| Lucidol® 256 initiator | 0.67 parts by weight |

Lucidol® 256 initiator is 2,5-dimethyl-2,5-bis(2-ethylhexanoylperoxy)hexane having a 10-hour half-life temperature ($t_{1/2}$) of 73 °C and commercially available from the Lucidol Division of Pennwalt Corporation, Buffalo, New York.

The average cure expansion of this resin system was determined to be +2.2 percent. The cured casting was white and opaque in appearance.

Example 25

The preparation of the resin system and cured casting in Example 18 was repeated with the exception that the following ingredients were used in the following amounts:

| | |
|---|---|
| Ethyoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP-40A | 43 parts by weight |
| Zelec® UN mold release | 0.72 parts by weight |
| Trigonox® 29-B75 initiator | 2.15 parts by weight |

The average cure shrinkage of this resin system was determined to be 1.3 percent. The average peak time to exotherm was 48 seconds. The curable resin system had a viscosity at 25°C of 129 mPa•s (centipoise) and the cured casting was white and opaque in appearance.

Example 26

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP-40A | 43 parts by weight |
| Zelec® UN mold release | 0.72 parts by weight |
| Tert-butylperbenzoate initiator | 2.15 parts by weight |

The average cure shrinkage of this resin system was determined to be 1.3 percent. The average peak time to exotherm was 66 seconds. The cured casting was white and opaque in appearance.

Example 27

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| BAKELITE® LP-40A | 43 parts by weight |
| Zelec® UN mold release | 0.72 parts by weight |
| Trigonox® 29-B75 initiator | 4.30 parts by weight |

The average cure shrinkage of this resin system was determined to be 2.0 percent. The average peak time to exotherm was 35 seconds. The curable resin system had a viscosity at 25°C of 116 mPa•s (centipoise) and the cured casting was white and opaque in appearance.

Example 28

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| Trigonox® 29-B75 initiator | 2.15 parts by weight |

The average cure shrinkage of this resin system was determined to be 3.0 percent. The average peak time to exotherm was 55 seconds. The cured casting was white and opaque in appearance.

Example 29

The preparation of the resin system and cured casting in Examples 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 43 parts by weight |
| Zelec® UN mold release | 0.72 parts by weight |
| Tert-butylperbenzoate initiator | 2.15 parts by weight |

The average cure shrinkage of this resin system was determined to be 0.3 percent. The average peak time to exotherm was 66 seconds. The cured casting was white and opaque in appearance.

Example 30

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 67 parts by weight |
| Zelec® UN mold release | 0.84 parts by weight |
| Trigonox® 29-B75 initiator | 2.51 parts by weight |

The average cure shrinkage of this resin system was determined to be 3.8 percent. The cured casting was white and opaque in appearance.

Example 31

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |

| | |
|---|---|
| Vinyl acetate | 10 parts by weight |
| LPA Solution 210 | 67 parts by weight |
| Zelec® UN mold release | 0.84 parts by weight |
| Tert-butylperoctoate initiator | 2.51 parts by weight |

The average cure expansion of this resin system was determined to be +1.7 percent. The cured casting was white and opaque in appearance.

Example 32

The preparation of the resin system and cured casting in Example 18 was repeated with the exception that the following ingredients were used in the following amounts:

| | |
|---|---|
| Ethoxylated bisphenol A dimethacrylate | 50 parts by weight |
| Styrene | 15 parts by weight |
| DVB-55 | 15 parts by weight |
| Hydroxyethyl methacrylate | 10 parts by weight |
| Vinyl acetate | 10 parts by weight |
| LPA Solution 210 | 67 parts by weight |
| Zelec® UN mold release | 0.84 parts by weight |
| Lucidol® 256 initiator | 2.51 parts by weight |

The average cure expansion of this resin system was determined to be +1.7 percent. The cured casting was white and opaque in appearance.

The resin systems of Examples 18 through 24 containing a thermoplastic polymer low profile additive and an initiator mixture containing at least one initiator with a 10-hour half-life temperature ($t_{1/2}$) of greater than 90°C and at least one initiator with a 10-hour half-life temperature ($t_{1/2}$) of less than 90°C as essential ingredients therein exhibited improved cure shrinkage control in comparison with the resin systems of Examples 25 through 32 in which the initiator mixture described herein was not included as an essential ingredient.

The following examples illustrate the preparation of reinforced composites from the molding compositions of this invention.

Example 33

The preparation of the resin system and molding procedure in Example 18 was repeated with the exception that approximately 45 grams of OCF M-8608 swirl glass mat commercially available from Owens-Corning Fiberglas Corporation. Toledo, Ohio was placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 80 seconds following injection, the resulting cured glass reinforced composite containing about 36 weight percent glass was removed from the mold. The cured glass reinforced composite was white and opaque in appearance.

Example 34

The preparation of the resin system and molding procedure in Example 18 was repeated with the exception that approximately 43 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The

injection time was 6 seconds and the injection pressure of 2.07 MPa (300 pounds per square inch) was maintained for a dwell period of 5 seconds. After 80 seconds following injection, the resulting cured glass reinforced composite containing 35 weight percent glass was removed from the mold. The cured glass reinforced composite was white and opaque in appearance.

Example 35

The preparation of the resin system and molding procedure in Example 19 was repeated with the exception that approximately 49 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 7 seconds and the injection pressure of 2.07 MPa (300 pounds per square inch) was maintained for a dwell period of 5 seconds. After 95 seconds following injection, the resulting cured glass reinforced composite containing about 39 weight percent glass was removed from the mold. The cured glass reinforced composite was white and opaque in appearance.

Examples 36

The preparation of the resin system and molding procedure in Example 19 was repeated with the exception that approximately 45 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 95 seconds following injection, the resulting cured glass reinforced composite containing about 37 weight percent glass was removed from the mold. The cured glass reinforced composite was white and opaque in appearance.

Example 37

The preparation of the resin system and molding procedure in Example 20 was repeated with the exception that approximately 47 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 80 seconds following injection, the resulting cured glass reinforced composite containing about 38 weight percent glass was removed from the mold. The cured glass reinforced composite was white and opaque in appearance.

Example 38

The preparation of the resin system and molding procedure in Example 20 was repeated with the exception that approximately 48 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 80 seconds following injection, the resulting cured glass reinforced composite containing about 39 weight percent glass was removed from the mold. The cured glass reinforced composite was white and opaque in appearance.

Example 39

The preparation of the resin system and molding procedure in Example 21 was repeated with the exception that approximately 43 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 7 seconds and the injection pressure of 2.07 (300 pounds per square inch) was maintained for a dwell period of 5 seconds. After 80 seconds following injection, the resulting cured glass reinforced composite containing about 35 weight percent glass was removed from the mold. The cured glass reinforced composite was white and opaque in appearance.

Example 40

The preparation of the resin system and molding procedure in Example 22 was repeated with the exception that approximately 48 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 7 seconds and the injection pressure of 2.07 MPa (300 pounds per square inch) was maintained for a dwell period of 5 seconds. After 95 seconds following injection, the resulting cured glass reinforced composite containing about 38 weight percent glass was removed from the mold. The cured glass reinforced composite was white and opaque in appearance.

Example 41

The preparation of the resin system and molding procedure in Example 25 was repeated with the exception that approximately 47 grams of OCF M-8608 swirl glass mat was placed in the 25.4cm x 14.0 x 0.25cm (10 inch x 5 1/2 inch x 1/10 inch) constant volume mold prior to closing, evacuating and injecting the mold. The injection time was 3 seconds and the injection pressure of 2.07 MPa (300 pounds per square inch) was maintained for a dwell period of 5 seconds. After 80 seconds following injection, the resulting cured glass reinforced composite containing about 39 weight percent glass was removed from the mold. The cured glass reinforced composite was white and opaque in appearance.

Example 42

The preparation of the resin system and molding procedure in Example 25 was repeated with the exception that approximately 48 grams of OCF M-8608 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 4 seconds and the injection pressure of 2.07 MPa (300 pounds per square inch) was maintained for a dwell period of 5 seconds. After 80 seconds following injection, the resulting cured glass reinforced composite containing about 38 weight percent glass was removed from the mold. The cured glass reinforced composite was white and opaque in appearance.

Example 43

The preparation of the resin system and molding procedure in Example 26 was repeated with the exception that approximately 47 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 110 seconds following injection, the resulting cured glass reinforced composite containing about 37 weight percent glass was removed from the mold. The cured glass reinforced composite was white and opaque in appearance.

Examples 44

The preparation of the resin system and molding procedure in Example 26 was repeated with the exception that approximately 48 grams of OCF M-8606 swirl glass mat with veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 110 seconds following injection, the resulting cured glass reinforced composite containing about 37 weight percent glass was removed from the mold. The cured glass reinforced composite was white and opaque in appearance.

Example 45

The preparation of the resin system and molding procedure in Example 27 was repeated with the exception that approximately 45 grams of OCF M-8608 swirl glass mat was placed in the 25.4cm x 14.0cm x 0.25cm (10 inch x 5 1/2 inch x 1/10 inch) constant volume mold prior to closing, evacuating and injecting the mold. The injection time was 5 seconds and the injection pressure of 2.07 MPa (3000 pounds per square inch) was maintained for a dwell period of 5 seconds. After 65 seconds following injection, the resulting cured glass reinforced composite containing about 37 weight percent glass was removed from the

mold. The cured glass reinforced composite was white and opaque in appearance.

Example 46

The preparation of the resin system and molding procedure in Example 27 was repeated with the exception that approximately 48 grams of OCF M-8608 swirl glass mat and veil glass mats positioned on the top and bottom of the OCF M-8608 swirl glass mat were placed in the 25.4cm x 14.0cm x 0.25cm (10 inch x 5 1/2 inch x 1/10 inch) constant volume mold prior to closing, evacuating and injecting the mold. The injection time was 6 seconds and the injection pressure of 2.07 MPa (300 pounds per square inch) was maintained for a dwell period of 5 seconds. After 80 seconds following injection, the resulting cured glass reinforced composite containing about 38 weight percent glass was removed from the mold. The cured glass reinforced composite was white and opaque in appearance.

Example 47

The preparation of the resin system and molding procedure in Example 28 was repeated with the exception that approximately 43 grams of OCF M-8608 swirl glass mat was placed in the 25.4cm x 14.0cm x 0.25cm (10inch x 5 1/2 inch x 1/10 inch) constant volume mold prior to closing, evacuating and injecting the mold. The injection time was 7 seconds and the injection pressure of 2.07 MPa (3000 pounds per square inch) was maintained for a dwell period of 5 seconds. After 80 seconds following injection, the resulting cured glass reinforced composite containing about 35 weight percent glass was removed from the mold. The cured glass reinforced composite was white and opaque in appearance.

Example 48

The preparation of the resin system and molding procedure in Example 29 was repeated with the exception that approximately 47 grams of OCF M-8608 swirl glass mat was placed in the 25.4cm x 14.0cm x 0.25cm (10 inch x 5 x 1/2 x 1/10 inch) constant volume mold prior to closing, evacuating and injecting the mold. The injection time was 7 seconds and the injection pressure of 2.07 MPa (300 pounds per square inch) was maintained for a dwell period of 5 seconds. After 110 seconds following injection, the resulting cured glass reinforced composite containing about 38 weight percent glass was removed from the mold. The cured glass reinforced composite was white and opaque in appearance.

The cured glass reinforced composites of Examples 33 through 40 exhibited generally improved surface appearance in comparison with the surface appearance of the cured glass reinforced composites of Examples 41 through 48 in which an initiator mixture containing at least one initiator with a 10-hour half-life temperature ($t_{1/2}$) of greater than 90° C and at least one initiator with a 10-hour half-life temperature ($t_{1/2}$) of less thank 90° C was not included therein.

## Claims

1. A curable molding composition comprising a mixture of:
(a) a poly(acrylate) characterized by the following empirical formula:

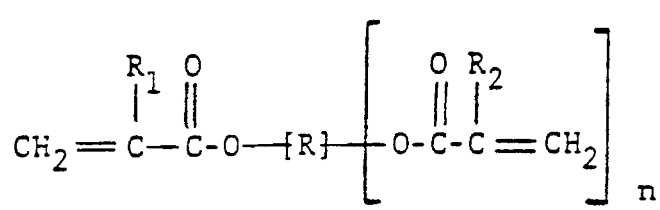

wherein R is the hydroxy-free residue of an organic polyhydric alcohol which contained alcoholic hydroxyl groups bonded to different carbon atoms, $R_1$ and $R_2$ are independently hydrogen or methyl, and n is 1 to 3;
(b) an ethylenically unsaturated monomer which is soluble in and copolymerizable with (a);
(c) unsubstituted or substituted meta- and/or para-divinylbenzene; and
(d) a thermoplastic polymer low profile additive which is soluble in the mixture of (a), (b) and (c);
components (a) and (b) each being present in amounts of from 10 to 75 weight percent, based on

the total weight of components (a) to (d).

2. A curable molding composition as defined in claim 1 wherein the poly(acrylate) is selected from one or more of the following: ethoxylated bisphenol A dimethacrylate, ethoxylated bisphenol A diacrylate, propoxylated bisphenol A dimethacrylate, propoxylated bisphenol A diacrylate, tetraethylene glycol dimethacrylate, diethylene glycol dimethacrylate, tetraethylene glycol diacrylate, diethylene glycol diacrylate, ethylene glycol dimethacrylate, trimethylolpropane triacrylate, and trimethylolpropane trimethacrylate.

3. A curable molding composition as defined in claim 1 or 2 wherein the poly(acrylate) is blended with at least one other thermosettable organic material containing two or more polymerizable carbon-carbon double bonds.

4. A curable molding composition as defined in any of claims 1 to 3 wherein the ethylenically unsaturated monomer comprises styrene, or a mixture of styrene and 2-hydroxyethyl methacrylate.

5. A curable molding composition as defined in any of claims 1 to 4 wherein the unsubstituted or substituted meta- and/or para-divinylbenzene comprises unsubstituted meta-divinylbenzene, unsubstituted para-divinylbenzene or mixtures thereof containing ethylvinylbenzene.

6. A curable molding composition as defined in any of claims 1 to 5 wherein the unsubstituted or substituted meta- and/or para-divinylbenzene is present in an amount of from 2 to 75 weight percent.

7. A curable molding composition as defined in any of claims 1 to 6 wherein the thermoplastic polymer low profile additive is selected from thermoplastic polymers of vinyl acetate, saturated polyesters, polyalkyl acrylates or methacrylates, polystyrene or mixtures or copolymers thereof.

8. A curable molding composition as defined in any of claims 1 to 6 wherein the thermoplastic polymer low profile additive comprises a carboxylated vinyl acetate polymer or copolymer of vinyl acetate and an ethylenically unsaturated carboxylic acid selected from acrylic acid, methacrylic acid, maleic acid, fumaric acid, and itaconic acid.

9. A curable molding composition as defined in any of claims 1 to 8 wherein the thermoplastic polymer low profile additive is present in an amount of from 5 to 25 weight percent.

10. A curable molding composition as defined in any of claims 1 to 9 further comprising a free radical initiator or a mixture of initiators.

11. A curable molding composition as defined in any of claims 1 to 10 further comprising a filler selected from calcium carbonate, clay, hydrated alumina, silica and mixtures thereof.

12. A curable molding composition as defined in claim 10 comprising a free radical initiator mixture containing at least one initiator with a 10-hour half-life temperature ($t_{1/2}$) of greater than 90 °C and at least one initiator with a 10-hour half-life temperature ($t_{1/2}$) of less than 90 °C.

13. A curable molding composition as defined in claim 12 wherein the free radical initiator mixture containing at least one initiator with a 10-hour half-life temperature ($t_{1/2}$) of greater than 90 °C and at least one initiator with a 10-hour half-life temperature ($t_{1/2}$) of less than 90 °C comprises a mixture of one or more of the following: peresters, perketals, azo compounds and peroxide containing compounds, preferably a mixture of tert-butyl perbenzoate and tert-butyl peroctoate, a mixture of 1,1-di-t-butylperoxy- 3,3,5-trimethylcyclohexane and 2-t-butylazo-2-cyano- 4-methylpentane, or a mixture of tert-butyl perbenzoate and 2,5-dimethyl-2,5-bis (2-ethylhexanoylperoxy)hexane.

14. A curable molding composition as defined in claim 13 wherein the free radical initiator mixture containing at least one initiator with a 10-hour half-life temperature ($t_{1/2}$) of greater than 90 °C and at least one initiator with a 10-hour half-life temperature ($t_{1/2}$) of less than 90 °C comprises a mixture of a major amount of at least one initiator with a 10-hour half-life temperature ($t_{1/2}$) of greater than 90 °C and a minor amount of at least one initiator with a 10-hour half-life temperature ($t_{1/2}$) of less than 90 °C.

15. A curable molding composition as defined in claim 14 wherein the free radical initiator mixture containing at least one initiator with a 10-hour half-life temperature ($t_{1/2}$) of greater than 90° C and at least one initiator with a 10-hour half-life temperature ($t_{1/2}$) of less than 90° C is present in an amount of from 0.1 to 5 weight percent.

16. A molded article prepared from any of the compositions of claims 1 to 15.

17. A molded article as defined in claim 16 which contains from 10 to 75 weight percent of one or more fibers having a melting point or a glass transition temperature above about 130° C, preferably fibers selected from fiberglass, carbon fibers, aromatic polyamide fibers, and mixtures thereof.

18. Process for producing a fiber reinforced article which comprises the steps of (a) providing in a heatable matched metal die mold, a bonded web of one or more of said fibers having a melting point or a glass transition temperature above 130° C, (b) providing in an accumulator zone, a liquid body of a thermosettable organic material which is curable upon heating to a thermoset resin composition, the viscosity of said liquid body being maintained essentially constant in the accumulator zone by keeping its temperature below that at which curing of said materials is substantial, (c) closing said mold containing said web, (d) injecting at least a portion of said thermosettable organic material under pressure from said accumulator zone into the mold to thereby fill the cavity in said mold, (e) initiating the curing of said materials by subjecting the materials to a temperature by heating the mold, which is above the temperature at which the curing of said materials is initiated, and (f) opening said mold and removing the cured thermoset article therefrom, characterized in that said thermosettable organic material is the curable molding composition according to claim 1.

19. The fiber reinforced article prepared from the process of claim 18.

**Revendications**

1. Composition durcissable pour moulage, comprenant un mélange :
(a) d'un poly(acrylate), caractérisé en ce qu'il répond à la formule empirique suivante :

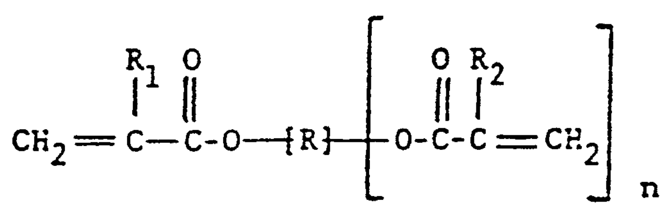

dans laquelle R représente le résidu, dépourvu de groupes hydroxy, d'un polyalcool organique qui contenait des groupes hydroxyle alcooliques liés à des atomes de carbone différents, $R_1$ et $R_2$ représentent indépendamment l'hydrogène ou un groupe méthyle, et n a une valeur de 1 à 3 ;
(b) d'un monomère à insaturation éthylénique qui est soluble dans, et copolymérisable avec, le constituant (a) ;
(c) de méta- et/ou para-divinylbenzène non substitué ou substitué ; et
(d) d'un additif à faible retrait consistant en un polymère thermoplastique, qui est soluble dans le mélange des constituants (a), (b) et (c) ;
les constituants (a) et (b) étant chacun présents en des quantités de 10 à 75 % en poids, sur la base du poids total des constituants (a) à (d).

2. Composition durcissable pour moulage suivant la revendication 1, dans laquelle le poly(acrylate) est choisi parmi un ou plusieurs des composés suivants : le diméthacrylate de bisphénol A éthoxylé, le diacrylate de bisphénol A éthoxylé, le diméthacrylate de bisphénol A propoxylé, le diacrylate de bisphénol A propoxylé, le diméthacrylate de tétra-éthylène-glycol, le diméthacrylate de diéthylène-glycol, le diacrylate de tétra-éthylène-glycol, le diacrylate de diéthylène-glycol, le diméthacrylate d'éthyléne-glycol, le triacrylate de triméthylolpropane et le triméthacrylate de triméthylolpropane.

3. Composition durcissable pour moulage suivant la revendication 1 ou 2, dans laquelle le poly(acrylate) est mélangé à au moins une autre substance organique thermodurcissable contenant deux ou plus de deux doubles liaisons carbone-carbone polymérisables.

4. Composition durcissable pour moulage suivant l'une quelconque des revendications 1 à 3, dans laquelle le monomère à insaturation éthylénique consiste en styrène ou un mélange de styrène et de méthacrylate de 2-hydroxyéthyle.

5. Composition durcissable pour moulage suivant l'une quelconque des revendications 1 à 4, dans laquelle le méta- et/ou para-divinylbenzène non substitué ou substitué consiste en méta-divinylbenzène non substitué, paradivinylbenzène non substitué ou leurs mélanges contenant de l'éthylvinylbenzène.

6. Composition durcissable pour moulage suivant l'une quelconque des revendications 1 à 5, dans laquelle le méta- et/ou para-divinylbenzène non substitué ou substitué est présent en une quantité de 2 à 75 % en poids.

7. Composition durcissable pour moulage suivant l'une quelconque des revendications 1 à 6, dans laquelle l'additif à faible retrait consistant en un polymère thermoplastique est choisi parmi des polymères thermoplastiques d'acétate de vinyle, des polyesters saturés, des polyacrylates ou -méthacrylates d'alkyle, un polystyrène ou leurs mélanges ou copolymères.

8. Composition durcissable pour moulage suivant l'une quelconque des revendications 1 à 6, dans laquelle l'additif à faible retrait du type polymère thermoplastique consiste en un polymère d'acétate de vinyle carboxylé ou un copolymère d'acétate de vinyle et d'un acide carboxylique à insaturation éthylénique choisi entre l'acide acrylique, l'acide méthacrylique, l'acide maléique, l'acide fumarique et l'acide itaconique.

9. Composition durcissable pour moulage suivant l'une quelconque des revendications 1 à 8, dans laquelle l'additif à faible retrait consistant en polymère thermoplastique est présent en une quantité de 5 à 25 % en poids.

10. Composition durcissable pour moulage suivant l'une quelconque des revendications 1 à 9, comprenant en outre un initiateur ou mélange d'initiateurs radicalaires.

11. Composition durcissable pour moulage suivant l'une quelconque des revendications 1 à 10, comprenant en outre une charge choisie entre le carbonate de calcium, une argile, l'alumine hydratée, la silice et leurs mélanges.

12. Composition durcissable pour moulage suivant la revendication 10, comprenant un mélange d'initiateurs radicalaires contenant au moins un initiateur qui possède une température de demi-vie de 10 heures ($t_{1/2}$) supérieure à 90 °C et au moins un initiateur ayant une température de demi-vie de 10 heures ($t_{1/2}$) inférieure à 90 °C.

13. Composition durcissable pour moulage suivant la revendication 12, dans laquelle le mélange d'initiateurs radicalaires contenant au moins un initiateur ayant une température de demi-vie de 10 heures ($t_{1/2}$) supérieure à 90 °C et au moins un initiateur ayant une température de demi-vie de 10 heures ($t_{1/2}$) inférieure à 90 °C consiste en un mélange d'un ou plusieurs des initiateurs suivants : des peresters, des percétals, des composés azoïques et des composés à fonction peroxy, de préférence un mélange de perbenzoate de tertio-butyle et de peroctoate de tertio-butyle, un mélange de 1,1-di-tertio-butylperoxy-3,3,5-triméthylcyclohexane et de 2-tertio-butylazo-2-cyano-4-méthylpentane, ou un mélange de perbenzoate de tertiobutyle et de 2,5-diméthyl-2,5-bis-(2-éthylhexanoylperoxy)hexane.

14. Composition durcissable pour moulage suivant la revendication 13, dans laquelle le mélange d'initiateurs radicalaires contenant au moins un initiateur ayant une température de demi-vie de 10 heures ($t_{1/2}$) supérieure à 90 °C et au moins un initiateur ayant une température de demi-vie de 10 heures ($t_{1/2}$) inférieure à 90 °C consiste en un mélange d'une quantité dominante d'au moins un initiateur ayant une température de demi-vie de 10 heures ($t_{1/2}$) supérieure à 90 °C et d'une quantité secondaire d'au moins un initiateur ayant une température de demi-vie de 10 heures ($t_{1/2}$) inférieure à 90 °C.

15. Composition durcissable pour moulage suivant la revendication 14, dans laquelle le mélange d'initiateurs radicalaires contenant au moins un initiateur ayant une température de demi-vie de 10 heures ($t_{1/2}$) supérieure à 90° C et au moins un initiateur ayant une température de demi-vie de 10 heures ($t_{1/2}$) inférieure à 90° C est présent en une quantité de 0,1 à 5 % en poids.

16. Article moulé préparé à partir de l'une quelconque des compositions suivant les revendications 1 à 15.

17. Article moulé suivant la revendication 16, qui contient 10 à 75 % en poids d'une ou plusieurs fibres ayant un point de fusion ou une température de transition vitreuse supérieur à environ 130° C, de préférence des fibres choisies entre la fibre de verre, des fibres de carbone, des fibres d'un polyamide aromatique et leurs mélanges.

18. Procédé de production d'un article renforcé par des fibres, qui comprend les étapes consistant (a) à placer dans un moule métallique en deux parties, pouvant être chauffé, une bande encollée constituée d'une ou plusieurs des fibres ayant un point de fusion ou une température de transition vitreuse supérieur à 130° C, (b) à placer dans une zone d'accumulation une masse liquide d'une matière organique thermodurcissable qui peut durcir par chauffage en une composition de résine thermodurcie, la viscosité de ladite masse liquide étant maintenue pratiquement constante dans la zone d'accumulation par maintien de la température de cette masse liquide au-dessous de celle à laquelle le durcissement desdites matières est notable, (c) à fermer ledit moule contenant ladite bande, (d) à injecter au moins une partie de ladite matière organique thermodurcissable sous pression de la zone d'accumulation dans le moule pour remplir ainsi la cavité présente dans ledit moule, (e) à déclencher le durcissement desdites matières en soumettant les matières à une température, par chauffage du moule, qui est supérieure à la température à laquelle le durcissement desdites matières est déclenché, et (f) à ouvrir ledit moule et enlever de ce moule l'article thermodurci, caractérisé en ce que ladite matière organique thermodurcissable est la composition durcissable pour moulage suivant la revendication 1.

19. Article renforcé par des fibres, préparé par mise en oeuvre du procédé suivant la revendication 18.

**Patentansprüche**

1. Härtbare Formzusammensetzung, die eine Mischung umfaßt aus:
   (a) einem Poly(acrylat), gekennzeichnet durch die folgende empirische Formel

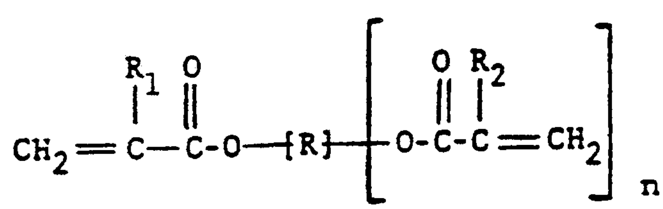

   worin R der hydroxylgruppenfreie Rest eines organischen mehrwertigen Alkohols ist, der alkoholische, an unterschiedliche Kohlenstoffatome gebundene Hydroxylgruppen enthielt, $R_1$ und $R_2$ unabhängig Wasserstoff oder Methyl bedeuten und n = 1 bis 3 ist;
   (b) einem ethylenisch Ungesättigten Monomer, das in (a) löslich und mit diesem copolymerisierbar ist;
   (c) unsubstituiertem oder substituiertem meta- und/oder para-Divinylbenzol und
   (d) einem thermoplastischen Profilgebungszusatz, der in der Mischung aus (a), (b) und (c) löslich ist, wobei die Komponenten (a) und (b) jeweils in Mengen von 10 bis 75 Gew.-%, bezogen auf das Gesamtgewicht der Komponenten (a) bis (d), anwesend sind.

2. Härtbare Formzusammensetzung gemäß Definition in Anspruch 1, worin das Poly(acrylat) aus einer oder mehreren der folgenden Substanzen ausgewählt ist: ethoxyliertem Bisphenol-A-dimethacrylat, ethoxyliertem Bisphenol-A-diacrylat, propoxyliertem Bisphenol-A-dimethacrylat, propoxyliertem Bisphenol-A-diacrylat, Tetraethylenglykoldimethacrylat, Diethylenglykoldimethacrylat, Tetraethylenglykoldiacrylat, Diethylenglykoldiacrylat, Ethylenglykoldimethacrylat, Trimethylolpropantriacrylat und Trimethylolpropantrimethacrylat.

3. Härtbare Formzusammensetzung gemäß Definition in Anspruch 1 oder 2, worin das Poly(acrylat) mit mindestens einem anderen wärmehärtenden organischen Material, das zwei oder mehrere polymerisierbare Kohlenstoff-Kohlenstoff-Doppelbindungen enthält, vermischt ist.

4. Härtbare Formzusammensetzung gemäß Definition in irgendeinem der Ansprüche 1 bis 3, worin das ethylenisch ungesättigte Monomer Styrol oder eine Mischung aus Styrol und 2-Hydroxyethylmethacrylat umfaßt.

5. Härtbare Formzusammensetzung gemäß Definition in irgendeinem der Ansprüche 1 bis 4, worin das unsubstituierte oder substituierte meta- und/oder para-Divinylbenzol unsubstituiertes meta-Divinylbenzol, unsubstituiertes para-Divinylbenzol oder deren Ethylvinylbenzol enthaltende Mischungen umfaßt.

6. Härtbare Formzusammensetzung gemäß Definition in irgendeinem der Ansprüche 1 bis 5, worin das unsubstituierte oder substituierte meta- und/oder para-Divinylbenzol in einer Menge von 2 bis 75 Gew.-% vorliegt.

7. Härtbare Formzusammensetzung gemäß Definition in irgendeinem der Ansprüche 1 bis 6, worin der thermoplastische Profilgebungszusatz aus thermoplastischen Polymeren von Vinylacetat, gesättigten Polyestern, Polyalkylacrylaten oder -methacrylaten, Polystyrol oder Mischungen oder Copolymeren derselben ausgewählt ist.

8. Härtbare Formzusammensetzung gemäß Definition in irgendeinem der Ansprüche 1 bis 6, worin der thermoplastische Profilgebungszusatz ein carboxyliertes Vinylacetatpolymer oder ein Copolymer aus Vinylacetat und einer ethylenisch ungesättigten Carbonsäure, ausgewählt aus Acrylsäure, Methacrylsäure, Maleinsäure, Fumarsäure und Itaconsäure, umfaßt.

9. Härtbare Formzusammensetzung gemäß Definition in irgendeinem der Ansprüche 1 bis 8, worin der thermoplastische Profilgebungszusatz in einer Menge von 5 bis 25 Gew.-% vorliegt.

10. Härtbare Formzusammensetzung gemäß Definition in irgendeinem der Ansprüche 1 bis 9, die weiterhin einen freien Radikalstarter oder eine Mischung von Startern umfaßt.

11. Härtbare Formzusammensetzung gemäß Definition in irgendeinem der Ansprüche 1 bis 10, die weiterhin ein Füllmittel, ausgewählt aus Calciumcarbonat, Ton, hydratisiertem Aluminiumoxid, Siliciumdioxid und deren Mischungen, umfaßt.

12. Härtbare Formzusammensetzung gemäß Definition in Anspruch 10, die eine freie Radikalstartermischung umfaßt, die mindestens einen Starter mit einer 10-stündigen Halbwertzeittemperatur ($t_{1/2}$) über 90 °C und mindestens einen Starter mit einer 10-stündigen Halbwertzeittemperatur ($t_{1/2}$) unter 90 °C enthält.

13. Härtbare Formzusammensetzung gemäß Definition in Anspruch 12, worin die freie Radikalstartermischung, die mindestens einen Starter mit einer 10-stündigen Halbwertzeittemperatur ($t_{1/2}$) über 90 °C und mindestens einen Starter mit einer 10-stündigen Halbwertzeittemperatur ($t_{1/2}$) unter 90 °C enthält, eine Mischung aus einer oder mehreren der folgenden Substanzen umfaßt: Perester, Perketale, Azoverbindungen und peroxidhaltige Verbindungen, vorzugsweise eine Mischung aus t-Butylperbenzoat und t-Butylperoctoat, eine Mischung aus 1,1-Di-t-butylperoxy-3,3,5-trimethylcyclohexan und 2-t-Butylazo-2-cyano-4-methylpentan oder eine Mischung aus t-Butylperbenzoat und 2,5-Dimethyl-2,5-bis-(2-ethylhexanoylperoxy)hexan.

14. Härtbare Formzusammensetzung gemäß Definition in Anspruch 13, worin die freie Radikalstartermischung, die mindestens einen Starter mit einer 10-stündigen Halbwertzeittemperatur ($t_{1/2}$) über 90 °C und mindestens einen Starter mit einer 10-stündigen Halbwertzeittemperatur ($t_{1/2}$) unter 90 °C enthält, eine Mischung aus einer Hauptmenge mindestens eines Starters mit einer 10-stündigen Halbwertzeittemperatur ($t_{1/2}$) über 90 °C und einer geringeren Menge mindestens eines Starter mit einer 10-stündigen Halbwertzeittemperatur ($t_{1/2}$) unter 90 °C umfaßt.

**15.** Härtbare Formzusammensetzung gemäß Definition in Anspruch 14, worin die freie Radikalstartermischung, die mindestens einen Starter mit einer 10-stündigen Halbwertzeittemperatur ($t_{1/2}$) über 90° C und mindestens einen Starter mit einer 10-stündigen Halbwertzeittemperatur ($t_{1/2}$) unter 90° C enthält, in einer Menge von 0,1 bis 5 Gew.-% vorliegt.

**16.** Formgegenstand, hergestellt aus irgendeiner der Zusammensetzungen der Ansprüche 1 bis 15.

**17.** Formgegenstand gemäß Definition in Anspruch 16, der 10 bis 75 Gew.-% einer oder mehrerer Fasern mit einem Schmelzpunkt oder einer Glasübergangstemperatur über etwa 130° C, vorzugsweise Fasern, ausgewählt aus Glasfasern, Kohlefasern, aromatischen Polyamidfasern und deren Mischungen, enthält.

**18.** Verfahren zur Herstellung eines faserverstärkten Gegenstandes, das die Schritte umfaßt:
(a) Einlegen einer gebondeten Bahn aus einer oder mehreren der Fasern mit einem Schmelzpunkt oder einer Glasübergangstemperatur über 130° C in eine erhitzbare zweiteilige Metallform,
(b) Zuführen einer flüssigen Masse aus einem wärmehärtenden, organischen Material zu einer Akkumulatorzone, das durch Erhitzen in eine wärmegehärtete Harzzusammensetzung härtbar ist, wobei die Viskosität der flüssigen Masse in der Akkumulatorzone im wesentlichen konstant gehalten wird, indem dessen Temperatur unter der Temperatur gehalten wird, bei welcher die Aushärtung des Materials erheblich ist,
(c) Schließen der die Bahn enthaltenden Form,
(d) Einspritzen mindestens eines Teils des wärmehärtbaren, organischen Materials unter Druck aus der Akkumulatorzone in die Form, um so deren Hohlraum zu füllen,
(e) Einleiten der Aushärtung der Materialien, indem man diese durch Erhitzen der Form einer Temperatur aussetzt, die über der Temperatur liegt, bei welcher das Aushärten des Materials beginnt, und
(f) Öffnen der Form und Entfernen des ausgehärteten, wärmegehärteten Gegenstandes,
dadurch gekennzeichnet, daß das wärmehärtbare, organische Material die härtbare Formzusammensetzung gemäß Anspruch 1 ist.

**19.** Faserverstärkter Gegenstand, hergestellt nach dem Verfahren von Anspruch 18.